# EUROPEAN PATENT SPECIFICATION

(11) **EP 3 002 950 B1**
(45) Date of publication and mention of the grant of the patent: **17.03.2021**
(21) Application number: 15184485.9
(22) Date of filing: 09.09.2015
(51) Int. Cl.: H04N 21/418, H04N 21/43, H04N 21/4385, H04N 21/4405

(54) **USB INTERFACE FOR PERFORMING TRANSPORT I/O**
USB-SCHNITTSTELLE ZUR DURCHFÜHRUNG VON TRANSPORT-I/O
INTERFACE USB POUR EFFECTUER DES E/S TRANSPORT

(30) Priority: 09.09.2014 US 201462048142 P; 29.01.2015 US 201514608900
(43) Date of publication of application: 06.04.2016
(73) Proprietor: Nagrastar, LLC, Englewood, CO 80112 (US)
(72) Inventor: PERRINE, Jerome, Englewood, CO Colorado 80112 (US); GOUPIL, Hervé, Englewood, CO Colorado 80112 (US); VAN RIEK, Maurice Gerard, Englewood, CO Colorado 80112 (US); BEALS, William, Englewood, CO Colorado 80112 (US); FISCHER, Nicolas, Englewood, CO Colorado 80112 (US); ELLIS, Benjamin Brian, Englewood, CO Colorado 80112 (US); DUVAL, Gregory, Englewood, CO Colorado 80112 (US)
(74) Representative: Grünecker Patent- und Rechtsanwälte PartG mbB

(56) References cited:
- EP-A1- 1 662 361
- EP-A1- 2 541 959
- EP-A2- 0 740 478
- EP-A2- 2 204 997
- WO-A1-2012/101420
- WO-A2-2007/072211
- DE-U1-202007 015 387
- US-A1- 2003 002 577
- US-A1- 2004 001 591
- US-A1- 2004 181 800
- US-A1- 2004 260 823
- US-A1- 2008 165 962
- US-A1- 2013 185 566

## Description

### Background

Digital Video Broadcasting (DVB) is an internationally recognized standard for transmitting digital television over cable, satellite, and other transmission mediums. A weakness of the DVB architecture is that the network control word used to decrypt content is easily shared over the Internet allowing non-subscribers access to broadcasted content. It is with respect to this general environment that embodiments of the present invention have been contemplated.

EP 2 541 959 A1 relates to a network media adapter including peripheral interfaces for connection to connectors of multiple A/V sources and A/V sinks and including processing that ensure media data integrity. Components are configured to synchronize local media clocks of the A/V sources and sinks to ensure media data integrity affiliated with a protocol of a media network over which the media data is transported. A quality of service compliant media interface is integrated in the network media adapter through which to send and receive processed A/V media data to and from the media network according to the protocol.

WO 2012/101420 A1 relates to techniques for decrypting a transport stream. A set-top box is connected to a television. Moreover, a CICAM module is inserted into the set-top box. The set-top box is connected to an antenna and the antenna receives digital television signals from a broadcaster as a transport stream. The received signals form a scrambled transport stream and are fed into the CICAM module. The transport stream is scrambled using the common scrambling algorithm. Additionally provided by the broadcaster are the ECM and the EMM. These are used to determine the decryption key used to descramble the scrambled DVB signals. The received transport stream is fed into a descrambler. The descrambler also demultiplexes the received transport stream. The descrambler descrambles the received transport stream using a control word provided by the CICAM. Additionally, the demultiplexed transport stream is stored in a CSA unencrypted format on a storage medium. To reduce the amount of data passed between the CICAM and the set-top box, the transport stream is not sent over a secure channel from the CICAM to the set-top box.

DE 20 2007 015387 U1 relates to a digital broadcast receiver. A universal interface controller 14 receives an encrypted signal from a signal receiving module 11. The encrypted signal is decrypted by the access control module 2 and then transmitted to the USB controller 13. The USB controller 13 transmits the decrypted signal to the system 3 via a USB interface.

### Summary

It is the object of the present invention to improve the security of prior art systems.

This object is solved by the subject matter of the independent claims.

Preferred embodiments are defined by the dependent claims.

Embodiments of the present disclosure relate to systems and methods to access content using a Transport I/O system. In embodiments, a secure processor receives network encrypted content. The secure processor may decrypt the network encrypted content using a network control word. In such embodiments, the network control word never leaves the secure processor and, thus, is protected from interception by an unauthorized user.

In further embodiments, after decrypting the network encrypted content, the secure processor may re-encrypt the content using a local control word to produce locally encrypted content. The locally encrypted content may be uniquely encrypted for a specific device such as, for example, a set-top-box, a system on a chip, or any other type of device capable of receiving and modifying content. In embodiments, the secure processor provides the locally encrypted content to the device.

The device may receive the locally encrypted content and obtain the local control word. Using the local control word, the device may decrypt the locally encrypted content to produce clear content. The clear content may be processed by the device. For example, the device may display the content or store the content for later use. In embodiments, the secure processor may leverage standard connections to enable interaction with many different types of devices.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### Brief Description of the Drawings

The same number represents the same element or same type of element in all drawings.
**FIG. 1** illustrates a communications system **100** that may be employed with a Transport I/O system to protect content.
**FIG. 2** is a flowchart representing an embodiment of a method **200** of performing network content decryption.
**FIG. 3** is an embodiment of a method **300** for processing locally encrypted content.
**FIG. 4** is an embodiment of a method **400** for receiving and processing protected content using a Transport I/O system.
**FIG. 5** is an embodiment of a method **500** that may be employed to reset functionality of a secure device.
**FIG. 6** is an embodiment of a packet pacing method **600**.
**FIG. 7** is an embodiment illustrating the compatibility between an ISO-7816 smart card and a smart card capable of supporting the systems and methods disclosed herein.
**FIG. 8** is an embodiment of a secure processing device **800** that may be employed with the systems or to perform the methods disclosed herein.
**FIG. 9** is an embodiment of a set-top-box that may be used to perform the Transport I/O system methods and be part of the systems disclosed herein.
**FIG. 10** illustrates an embodiment of a computer environment and computer system 1000 for implementing the systems and methods disclosed herein.
**FIG. 11** illustrates an exemplary connector **1100** that may be used in conjunction with a smartchip.
**FIG. 12** is an embodiment of a conditional access system **1200** utilizing a connector.
**FIG. 13** is an embodiment of a method **1300** for determining whether to configure a connector for a conditional access mode.
**FIG. 14** is an embodiment of a method **1400** for determining whether to perform conditional access operations.
**FIG. 15** is a flowchart representing an embodiment of a method **1500** of performing network content decryption via a standard connector.
**FIG. 16** is an embodiment of a method **1600** for processing locally encrypted content received via a connector.
**FIG. 17** is an embodiment of a secure processing device **1700**.

### Detailed Description

The various embodiments described herein generally provide systems and methods for protecting streamed content by employing a Transport I/O system. In embodiments, a Transport I/O system can be employed to decrypt content, such as, but not limited to, a network broadcast stream without exposing a network encryption key to an unauthorized party. For example, in an embodiment where a Transport I/O system is operating in a Digital Video Broadcasting environment, a Transport I/O system may maintain a control word on a smart card and use the control word to decrypt a network broadcast on the smart card, rather than providing a decrypted control word to a descrambler that is not part of the smart card. In other embodiments, a Transport I/O system may protect a control word from exposure by applying additional encryption to a control word, securely communicating a control word to another component, etc. One of skill in the art will appreciate that any other means of reducing the risk of exposure of a control word or control words may be employed by a Transport I/O system.

In embodiments, the systems and methods disclosed herein may be practiced in a Digital Video Broadcasting (DVB) compliant system. DVB is a set of internationally accepted open standards for broadcasting digital television. The DVB standards define both the physical layer and the data link layer of a distributed system. There are DVB standards defining the distribution of content over various different mediums. For example, satellite transmissions are defined in the DVB-S, DVB-S2, and DVB-SH specifications. Cable transmission is defined in the DVB-C and DVB-C2 specifications. Terrestrial television transmission is defined in the DVB-T and DVB-T2 specifications for standard television formats and DVB-H and DVB-H2 for the transmission of mobile television, e.g., television for handheld devices such as mobile phones. Microwave transmission is defined in the DVB-MT, DVB-MC, and DVB-MS standards.

In addition to defining the physical and data link layers, the DVB suite of standards includes standards that are used to provide conditional access protection of the transmitted content. Examples include the DVB-CA, DVB-CSA, and DVB-CI standards. Conditional access is a method of protecting content by requiring a device to meet certain criteria before it accesses content. Conditional access plays an important role in ensuring that broadcasted content is made available only to subscribers of a particular broadcast system (e.g., cable and satellite customers, etc.). The general architecture uses a global key, called a network control word (NCW), for performing conditional access. One or more NCW's are used to encrypt data before it is broadcast to subscribers. The NCW's are transmitted by a head-end (e.g., a satellite or cable provider) to subscriber devices in an entitlement control message (ECM). The ECM is generally encrypted before transmission to the subscriber device. The conditional access system of the subscriber devices (e.g., a smart card or other conditional access module whether in hardware or software) decrypts the ECM using information received in an entitlement management message (EMM) transmitted from the head-end. The subscriber device can then use the NCW's to decrypt the content broadcast by the head-end. Generally, a NCW is used for a certain period of time, or a crypto period. Upon expiration of a crypto period a new crypto period begins. The head-end may then transmit a new NCW to a subscriber device(s) and proceed to use the new NCW to encrypt the broadcast content.

One of the main weaknesses of the DVB conditional access architecture is that a NCW can be decrypted and easily shared over the Internet. Because the content is broadcast to many users, the content must be encrypted with the same key (e.g., same network control word) for every subscriber. Thus, once the network control word is discovered, any unauthorized user (e.g., a non-subscriber) with access to the network may use the network control word to decrypt the broadcast content. Generally, the NCW's consists of eight (8) bytes. The duration of a crypto period usually varies between five (5) to sixty (60) seconds. Thus, a non-subscriber may defeat the DVB conditional access architecture based upon the discovery of the eight (8) byte NCW, a task which may be accomplished within the duration of a typical crypto period. Generally, after the NCW is obtained by the smart card the smart card provides the NCW to an external device or component. The external device or component uses the NCW to decrypt the broadcast content. However, the NCW may be intercepted and shared with others, thereby allowing unauthorized sharing of the content.

While the present disclosure describes the Transport I/O system as a solution to the shortcomings of DVB conditional access, one of skill in the art will appreciate that the methods and systems disclosed herein can be practiced to protect content in other types of data transmission streaming and/or broadcasting that are not compliant with the DVB architecture such as, but not limited to, streaming media over the Internet. The systems and methods disclosed herein with respect to the Transport I/O system will now be discussed in detail with respect to the accompanying figures.

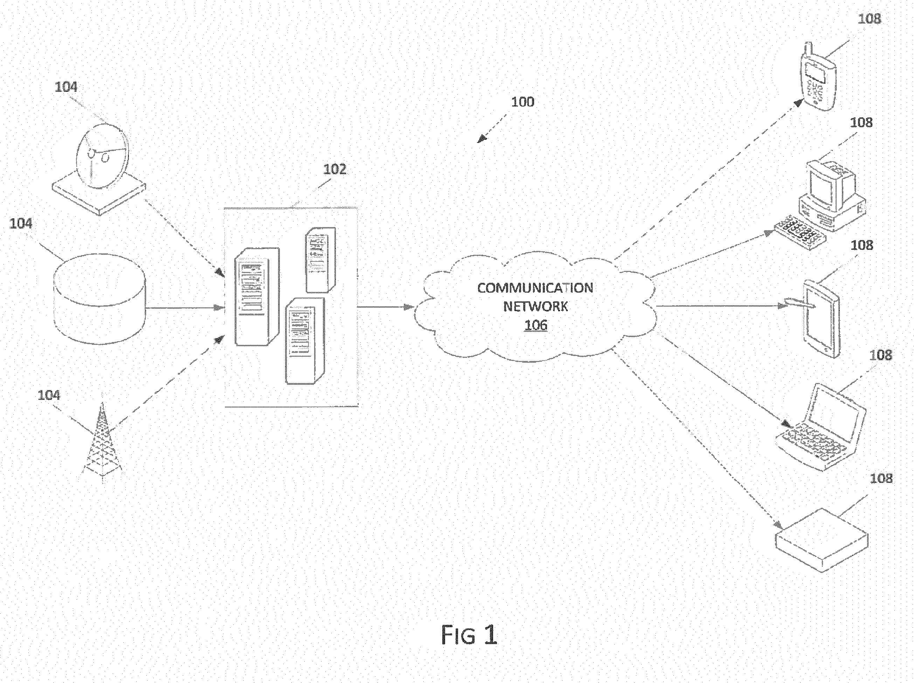

**FIG. 1** illustrates a communications system **100** that may be employed with a Transport I/O system to protect content. The communications system includes a head-end device **102** that receives content from content providers **104** and distributes the content across a communication network **106** to various recipient devices **108**. The recipient devices can access the content and display it to a user. A single recipient device 108 can be any device capable of receiving and decoding a data transmission stream over communication network **106**. Such devices include, but are not limited to, mobile phones, smart phones, personal digital assistants (PDAs), satellite or cable set-top-boxes, desktop computers, laptop computers, tablet computers, televisions, radios, a video processing device, or any other device known to the art. In embodiments, recipient devices **108** of subscribers are generally able to access the encryption key used to decrypt the content, while non-subscribers are not able to access the encryption key without circumventing the security measures employed by the head-end device **102** broadcasting the content over the communication network **106**.

In embodiments, the head-end **102** may be a distribution point of a cable television provider, the distribution of point of a satellite television provider (e.g., a satellite), a terrestrial wireless network, a server broadcasting content over the Internet, or any type of device capable of distributing content over a communications network. One of skill in the art will appreciate that the head-end device **102** may be any type of device, or a collection of devices (as the case may be), that are capable of receiving, encrypting, and broadcasting content over a network.

In one embodiment, the content broadcast over communications system **100** may be generated by the head-end device **102**. In other embodiments, the head-end device **102** may receive content from one or more content providers **104**. In such embodiments, the head-end device **102** is in electrical communication with one or more content providers **104**. For example, a content provider may be a cable, terrestrial, or satellite television station that transmits content to the head-end device **102** over a wired (e.g., cable, fiber optic, or Internet connection) or wireless connection (e.g., via radio, microwave, or satellite communications). In other embodiments, the content may reside in a datastore that is in electrical communication with the head-end device **102**. While **FIG. 1** depicts the content providers **104** as being separate entities from the head-end device **102**, in other embodiments, the content providers **104** and head-end device **102** may be a single entity.

The head-end device **102** is tasked with distributing the content over a communication network **106** to various recipient devices **108**. In embodiments, the communication network **106** may be the Internet, a cable network, a fiber optic network, a satellite communications network, a terrestrial broadcasting network (e.g., networks communicating over radio or microwave transmission mediums), a cellular data network, a wide area network (WAN), a local area network (LAN), a plain old telephone service (POTS) network, the Internet, or any other type of communication network capable of streaming, broadcasting, and/or otherwise facilitating data transmissions between various devices. One of skill in the art will appreciate that the systems and methods disclosed herein can be practiced regardless of the type of communication network used to transmit data between devices. In many cases, the head-end device **102** may broadcast the content in a data transmission stream over the communications network rather than sending content to a particular device. Because the content is being broadcast over the communication network **106**, the transmission can be received by any number of devices capable of interacting with the communication network **106**. In order to prevent unauthorized users from accessing the broadcasted data transmission stream, the head-end device **102** encrypts the data transmission stream before it is broadcast over the communication network **106**. Because the network broadcasted content is made available to multiple devices, a common encryption key (e.g., a network control word) may be used to encrypt the network broadcasted content (e.g., network encrypted content). In embodiments, the network broadcast content may be a network encrypted stream that includes content, such as network encrypted content, and data. In embodiments, the data contain information about the stream such as, but not limited to, encryption information, timing information, compression information, or any other type of information. Although not illustrated in **FIG. 1** the communication network may also be used to perform two-way communication between the head-end device **102** and the recipient device or devices **108**.

In embodiments, the data transmission stream is encrypted using a one or more keys, such as, but not limited to, a network control work (NCW). The NCW may be used to encrypt the data transmission stream for a certain amount of time (e.g., a crypto period) thereby resulting in the creation of network encrypted content. In embodiments, network encrypted content may be encrypted using a common key (e.g., an NCW) such that the network encrypted content can be decrypted by authorized users (e.g., subscribers). The NCW is shared between head-end device **102** and the various recipient device or devices **108**. In one embodiment, communication system **100** may operate according to the DVB architecture. In such embodiments, the NCW may be a control word (CW) that acts as the key used in encrypting the content. In such environment, the head-end **102** may periodically transmit the NCW to the various subscriber devices using an ECM message. Additionally, the head-end **102** transmits an EMM message to the various subscribers which contains information necessary to decrypt the ECM and retrieve the NCW. In such embodiments, the EMM may be decrypted by a secure device or processor, such as a smart card that is part of or connected to the recipient device to retrieve the NCW. The smart card may then provide the NCW to another component that is part of or in communication with the recipient device to decrypt the content. However, once the NCW is sent from the secure device and/or processor, the CW may be intercepted and shared with others to provide unauthorized access to the content.

In embodiments, the Transport I/O system solves this problem by maintaining the decrypted control word in a secure processing device (e.g., on a smart card, secure processor, secure memory, or any other secure device or secure component of a device). In such embodiments, the decrypted CW is maintained on the secure device, thereby preventing the interception and sharing of the CW. In such embodiments, the secure content (e.g., an encrypted broadcast or encrypted content) may be decrypted on the secure processing device. The secure processing device may then provide the clear content (e.g., decrypted content). While the clear content may be intercepted and shared, it may not be as easy to share the content due to the size of the content and the bandwidth required to share the content. In another embodiment, the secure processing device may uniquely encrypt the content for use by a specific device (e.g., a recipient device **108**). For example, in such embodiments a method utilizing a local encryption key, or local control word (LCW), may be used to create locally encrypted content. The local control word may be unique to a local device. The secure processor or secure processing device may then provide the locally encrypted content to the local device. Furthermore, in embodiments, the locally encrypted content may be uniquely encrypted for a specific device such as, for example, a set-top-box, a system on a chip, or any other type of device capable of receiving and modifying content.

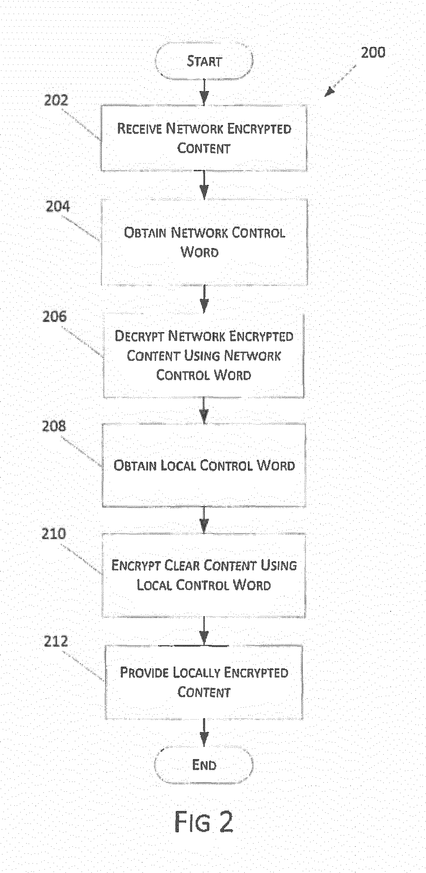

**FIG. 2** is a flowchart representing an embodiment of a method **200** of performing network content decryption. In embodiments, the method **200** may be performed by a secure device or a secure processor. An example of a secure device is a smart card. Flow begins at operation **202** where the network encrypted content is received by the secure device. In embodiments, network secure content may be content encrypted using a NCW. The NCW may be a common control word or encryption key that is used to encrypt and decrypt content sent to multiple users or subscribers. In one embodiment, the network encrypted content may be a single stream of data. In alternate embodiments, the network encrypted content may contain multiple network encrypted streams, such as network encrypted elementary streams. Network encrypted elementary streams may be streams that contain audio data, video data, closed captioned data, or any other type of data. A network encrypted elementary stream may consist of compressed data from a single source, such as a particular network or channel. In embodiments where the network encrypted content may contain multiple network encrypted elementary streams, one or more network encrypted elementary streams may be individually received at operation **202**. However, in alternate embodiments, the network encrypted content comprising multiple network encrypted elementary streams may be received at operation **202**. In such embodiments, individual network streams may be filtered out, e.g., by performing PID filtering or other type of filtering, to isolate one or more individual network encrypted elementary streams at operation **202**. Upon receiving the network encrypted content, flow continues to operation **204** where the network control word is obtained. In one embodiment, the network control word may be a control word provided by the content supplier, such as, but not limited to, a head-end or a server transmitting the content. In embodiments, the network control word may be previously known by the device performing the method **200**. In another embodiment, the network control word may be received by the device. In such embodiments, the network control word may be encrypted, and operation **204** may include decrypting the network control word. For example, in embodiments, the network control word may be obtained by decrypting an ECM that contains the network control word. The ECM may be decrypted using information from another message, such as an EMM. While the ECM and EMM messages are part of the DVB architecture, one of skill in the art will appreciate that other content delivery systems and architectures may be employed with the systems and methods disclosed herein.

Flow continues to operation **206** where the network encrypted content (e.g., a network encrypted elementary stream or multiple network encrypted elementary streams) is decrypted using the network control word. In one embodiment, a single network control word may be used to decrypt the network encrypted content. In alternate embodiments, multiple control words may be used to decrypt the network encrypted content such as, for example, when the network encrypted content comprises multiple network encrypted elementary streams that have each been encrypted using a different network control word. In such embodiments, multiple network control words may be obtained at operation **204** and then used to decrypt multiple network elementary streams at operation **206.** However, in still other embodiments, a single network control word may be used to encrypt multiple network elementary streams. In such embodiments, a single network control word may be used to decrypt the multiple network encrypted elementary streams. Decryption of the network encrypted content at operation 206 may result in clear content, that is, content that is not protected by encryption. Because operations **202-206** may be performed by a secure device or secure processor, such as, but not limited to, a smart card, the network control word remains on the secure device. By maintaining the network control word on the device, an unauthorized subscriber cannot intercept the network control word that is transmitted between the smart card and a device, such as a set-top-box, thereby impeding access to content by an unauthorized subscriber. In examples not shown in **FIG. 2** the clear content may be provided by the secure processor for display or storage after decryption step **206**. However, in the illustrated embodiment, an additional layer of protection may be added by performing local link encryption. In embodiments, local link encryption may comprise the re-encryption of the clear content using a local control word (LCW). The local control word may be an encryption key that is unique to a specific device. For example, in a set-top-box environment, the LCW may be an encryption key that is only shared with the particular set-top-box that the smart card performing the method **200** may be in communication with. In embodiments, different types of encryption modes may be performed for local link encryption. In one embodiment, not all of the data representing the content may be encrypted using local link encryption. For example, transport mode encryption may be used. In embodiments transport mode encryption comprises a determination as to which bytes of data to encrypt based upon an MPEG2 transport encryption. In another embodiment, Bulk Mode encryption may be performed. In Bulk Mode encryption, all bytes representing the data may be encrypted during local link encryption. Bulk Mode encryption may be utilized to exchange data between devices in a secure manner. For example, Bulk Mode encryption may be used to mix transport input (e.g., content) with internal data that is used by the one or more components participating in encryption/decryption of content. In further embodiments, Bulk Mode encryption may be utilized to support other types of content streams that may provide additional features, such as Internet Protocol television (IPTV) content streams. Selection of the encryption mode may be based upon data that is present in the content or a data stream that includes the content. For example, one or more bits may be a part of or added to the clear content to identify an encryption mode to perform during local link encryption. Furthermore, in embodiments, the encryption algorithm performed during local link encryption may be compliant with the ATIS-08000006 standard. However, one of skill in the art will appreciate that any type of encryption algorithm may be used for local link encryption, so long as the same encryption algorithm is available on both the smart card and the device.

In embodiments, a key setup used to select a key to be used for local link encryption may take place across security boundaries. For example, a key exchange may be made between a smart card and a set-top-box as part of the key setup. An exchanged key may be generated by a secure device, such as a smart card, and transmitted to a specific device that is communicating with the secure device, such as a set-top-box. Because the local link encryption key is specific to a single device, and not a network transmission, interception of the local link encryption key does not provide an unauthorized user the ability to globally access the broadcasted network content. In embodiments, multiple keys may be used for local link encryption. For example, a smart card may be able to simultaneously process multiple input streams and output multiple locally encrypted streams. In such embodiments, each locally encrypted stream may be encrypted using a unique local link encryption key. However, in other embodiments, the same local link encryption key may be used to encrypt each of the locally encrypted streams.

Flow continues to operation **208** where a local control word is obtained. A local control word may be any type of encryption key. In embodiments, the local control word may be an encryption key that is specific to a target device. In embodiments, the local control word may be obtained from ordinary software registers, a hardware key ladder, a random key generator, or from any other source. In one embodiment, the local control word may be dynamically generated and shared with a recipient device. In such embodiments, the key may be generated based upon characteristics of the device. In embodiment, multiple keys may be selected during obtain operation **208**. For example, two keys may be selected from a key ladder. A key ladder may store or otherwise identify a plurality of interrelated keys. In embodiments, any type of encryption key or keys, e.g., fixed encryption keys, dynamic encryption keys, randomly generated encryption keys, etc. may be employed with the embodiments disclosed herein.

After obtaining the local control word, flow continues to operation **210** where the network decrypted content is re-encrypted using the local control word to generate locally encrypted content. As was previously discussed, different types of encryption modes and encryption algorithms may be used to encrypt the content at operation **210**. In an embodiment, the encryption may be based upon the key obtained at operation **208**. In embodiments where multiple keys are obtained, one of the keys may be selected and used during encryption at operation **210**. For example, an appropriate key may be selected based upon an identifier in the content. The identifier may be part of the content or may be added to the content or a header associated with the content as it is processed during the method **200**. The identifier may be a single bit that identifies an even or an odd key (in embodiments where two keys are obtained). This identifier provides for the automatic selection of a key for use during the encryption process at operation **210**.

In further embodiments, in addition to encrypting the content, the size of the content may be increased. It may be beneficial to increase the size of the content in order to make it more difficult for the content to be shared over a network. For example, increasing the content size will require greater bandwidth to properly share the content with unauthorized users over a network. For example, data may be added to a broadcast stream to make it more difficult to process or share with unauthorized users. In embodiments where the content is streamed (e.g., audio and/or video content) non-content data packets may be added to the content stream and the bandwidth rates may be increased. The increase in bandwidth and the addition of non-content data provides additional security for the content when it leaves the secure device and/or secure processor that performs the method **200** by making the content more difficult to share and process. Further details regarding stream expansion are provided in U.S. Patent No. 8,385,542 entitled, "Methods and Apparatus for Securing Communications Between a Decryption Device and a Television Receiver," filed on April 27, 2009, which is hereby incorporated by reference in its entirety.

While the embodiment of the method **200** is illustrated as decrypting the network encrypted content, and subsequently locally encrypting the decrypted network encrypted content as two distinct operations, one of skill in the art will appreciate that, in embodiments, the decryption and encryption may be performed sequentially, performed as a single operation, or performed in parallel. In embodiments, a person of skill in the art will appreciate that stream expansion may also be performed in the single decryption/encryption operation. As such, one of skill in the art will appreciate that the method described with respect to **FIG. 2** may be performed using fewer or more operations than are illustrated herein.

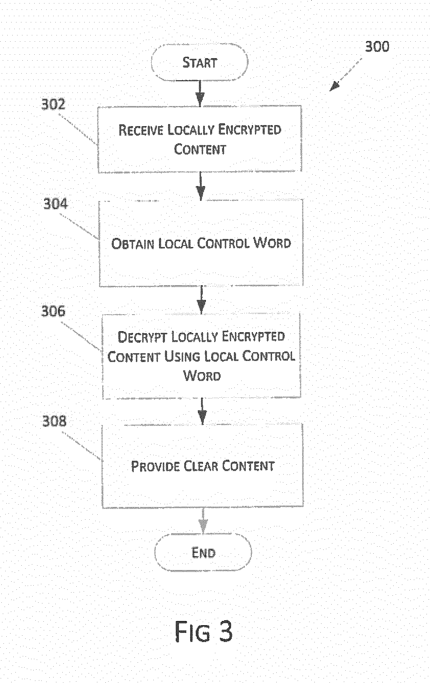

In further embodiments, the method **200** may operate on stream data. In such embodiments, a network encrypted stream may be received at operation **202**, a clear content stream may be generated by decrypting the network encrypted stream at operation **204**, and a locally encrypted stream may be generated at operation **212**. One of skill in the art will appreciate that the embodiments disclosed herein with respect to **FIG.** 2 (as well as with respect to **FIGs. 3-4**) may operate on stream data as well as data transmitted in any other form.

Further to the embodiment illustrated by **FIG. 2**, after performing the local encryption, flow continues to operation **212** where the locally encrypted content is provided to another device. For example, in a set-top-box environment, a smart card may provide the locally encrypted content to other components of the set-top-box for storage and/or display at operation **212**. In a general computing device, the locally encrypted content may be provided from a secure processor to a general processor and/or unprotected memory for storage and/or display at operation **212**. One of skill in the art will appreciate that the method **200** provides a solution to the problems described herein by providing locally encrypted content to unsecure components as opposed to providing a control word or encryption key as is generally performed by devices and systems that do not support embodiments of a Transport I/O system as described herein. Furthermore, one of skill in the art will appreciate that the weakest security leak in such content protection systems may occur when data is transmitted from a secure device and/or processor to a general device. However, embodiments disclosed herein address this weakness by providing locally encrypted content and, optionally, content that has its data and bandwidth expanded, thereby making it harder for an unauthorized user to process, share, and access the content even if it is intercepted as it is transmitted within the secure device and/or processor system/architecture.

In an example, the locally encrypted content may be provided as individual locally encrypted-elementary streams. For example, where multiple network encrypted elementary streams are received and decrypted, the multiple elementary streams may be individually encrypted and returned as individual locally encrypted elementary streams. In an embodiment, the multiple network encrypted elementary streams may be multiplexed into a single output stream. In this embodiment, the single output stream may be locally encrypted and then provided at operation **212**. In examples , multiple elementary streams may be multiplexed into a single output stream prior to the local encryption performed at operation **210**. In an embodiment, multiple elementary streams may be multiplexed into a single output stream after the local encryption operation **210**.

**FIG. 3** is an embodiment of a method **300** for processing locally encrypted content. In embodiments, the method **300** may be performed by a device such as a set-top-box, a laptop computer, a tablet computer, a smart phone, a television, or any other type of general computing device. Flow begins at operation **302** where the locally encrypted content is received. In embodiments, the locally encrypted content may be received from a secure device and/or secure processor that performed the method **200** described with respect to **FIG. 2****.** For example, in a non-limiting embodiment, the locally encrypted content may be received from a smart card that is in communication with a set-top-box. In another embodiment, the locally encrypted content may be received from a secure processor that is in communication with a general processor and/or general memory.

Upon receiving the locally encrypted content, flow continues to operation **304** where a local control word is obtained. A local control word may be any type of encryption key. In embodiments, the local control word may be an encryption key that is specific to the device performing the method **300**. In embodiments, the local control word may be obtained from the smart card using ordinary software registers, a hardware key ladder, a random key generator, or from any other source unique to the device. In one embodiment, the local control word may be received from the secure device and/or processor performing the method **200**. In another embodiment, the local control word may be generated by the device performing the method **300**. In such embodiments, the local control word may have been previously shared with a secure processing device and/or secure processor that created the locally encrypted content received at operation **302**. The local control word may be randomly generated. In embodiments, a single local control word may be used. In other embodiments, multiple local control words may be used. In such embodiments, the local control word may change periodically such that a local control word is discarded for a new local control word after a set period of time.

Flow continues to operation **306** where the locally encrypted content is decrypted using the local control word. Decryption of the locally encrypted content may produce content in the clear that is accessible by an application. One of skill in the art will appreciate that many type(s) of encryption mode(s) and/or algorithm(s) may be employed to decrypt the locally encrypted content. As such, a type of decryption algorithm may be employed at operation **306** to decrypt the content using the local control word. Furthermore, the device performing the decryption may be capable of handling and processing the locally encrypted content despite the increased bandwidth of the locally encrypted content due to non-content data. In such embodiments, decryption of the locally encrypted content at operation **306** may include identifying and removing non-content data from the content. In another embodiment, removal of the non-content data may not take place until the clear content is processed for display or storage.

Flow continues to operation **308** where the clear content is provided. In one embodiment, providing the clear content may include decoding, displaying and or otherwise playing the clear content. For example, the clear content may be displayed on a television, monitor, and or display that may be part of the device or in communication with the device performing the method **300**. In another embodiment, providing the clear content may include storing the clear content in data storage that may be part of the device or connected to the device performing the method **300.**

In an alternate embodiment, persistent encryption may be performed by not immediately decrypting the locally encrypted content as described in **FIG. 3**. In such embodiments, persistent encryption may be utilized on content, such as MPEG Transport Packets received from a broadcasted network transmission. In such embodiments, a secure device may still perform network decryption and local link encryption as described in **FIG. 2**; however, the device that receives the locally encrypted content may not immediately perform local link decryption. Instead, the device receiving the locally encrypted content may store the locally encrypted content, as it is encrypted, for later use. This allows the content to be encrypted for secure local storage, but the secure device can still control when the content is decrypted by, for example, providing a decryption key at a later time.

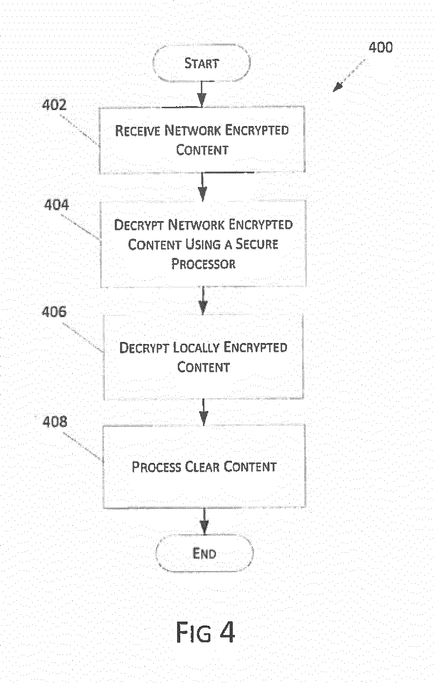

**FIG. 4** is an embodiment of a method **400** for receiving and processing protected content using a Transport I/O system. In embodiments, the method **400** may be performed by a set-top-box, a smartphone, a laptop, a tablet, a television, or any other type of general computing device such as the recipient devices discussed with respect to **FIG. 1****.** In embodiments, the device performing the method **400** may include or be in communication with and/or include a secure processing device and/or secure processor. The secure processing device and/or secure processor may be a removable component of the device. For example, the secure processor may be incorporated within a removable smart card that may be inserted and removed from a device performing the method **400**.

Flow begins at operation **402** where network encrypted content is received. Network encrypted content may be received from a head-end device. In embodiments, the network encrypted content may be received over a wireless or wired network. For example, the network encrypted content may be received from a satellite television provider, a cable television provider, from a terrestrial transmission, from a cellular network provider, or from a server over the Internet. In embodiments, the network encrypted content is content that may be transmitted to multiple different devices. As such, the network encrypted content may be encrypted using a network control word that is common to all devices receiving the content. Upon receiving the network encrypted content, flow continues to operation **404** where the network encrypted content is decrypted using a secure processing device and/or secure processor. In such embodiments, the network encrypted content may be provided to the secure processing device and/or secure processor at operation **404**. In one embodiment, the network encrypted content may be provided to the secure processor for decryption as it is received over a network. In another embodiment, the network encrypted content may be buffered prior to decryption by the secure processor.

As previously described, the secure processing device and/or secure processor may be part of the device performing the method **400** or may be a removable component of the device performing the method **400** (e.g., a smart card). In embodiments where the secure processor and/or secure processing device is a removable component, the secure processor and/or secure processing device may have a form factor such that it is compatible with legacy systems. For example, a smart card may have the form factor to operate in an ISO-7816 mode (or any other type of mode) in addition to a mode that supports the systems and methods for performing Transport I/O disclosed herein.

In one embodiment, the network encrypted content may be provided to the secure processor in an unfiltered manner. For example, one or more unfiltered MPEG Transport Streams may be provided. In such embodiments, the MPEG Transport Streams may be provided as received, without the prior removal of packets identified by packet identifiers (PIDs). In another embodiment, the device may filter the network encrypted content before decrypting the network encrypted content using a secure processor. For example, one or more filtered MPEG Transport Streams may be provided to the secure processor for decryption by removing some packets identified by PIDs. In yet another embodiment, multiple streams may be multiplexed and provided to the secure processor for decryption. For example, two or more MPEG Transport Streams may be multiplexed to create a combined stream. The combined stream may be provided to the secure processor for decryption.

In embodiments, the decryption operation **404** may also perform the method **200** discussed with respect to **FIG. 2****.** In such embodiments, the result of the operation **404** may also yield locally encrypted content. Flow continues to operation **406** where the locally encrypted content is decrypted. In embodiments, the method 300 described with respect to FIG. 3 may be employed at operation **406** to decrypt the locally encrypted content, In embodiments, decryption of the locally encrypted content is performed by a component on the device performing the method **400** that is not part of the secure processor. For example, the decryption may be performed by a general processor. In embodiments, decrypting locally encrypted content may yield a stream of unencrypted content.

Flow continues to operation **408** where the clear content is processed. In one embodiment, clear content may be processed by providing the content to a display and/or audio device that is part of or connected to the device performing the method **400**. In another embodiment, the clear content may be stored in memory or non-volatile storage at operation **408**. One of skill in the art will appreciate that any type of processing of the clear content may be performed at operation **408**.

As described with respect to embodiments of the method **400** a device performing the method may include different components to perform the different operations of the method **400**. For example, decryption of the network encrypted content may be performed by a secure component that is part of the device. In embodiments, the secure component may be removable, such as a smart card. The local decryption and processing operations may be performed by components other than the secure component. However, because the decryption of the network encrypted content is performed by the secure component, the network control word is not vulnerable to interception and sharing. Thus, the method **400** is a more secure process of decrypting network encrypted content without exposing the one or more keys required to decrypt the network encrypted content.

In embodiments where the secure processor is removable, such as, but not limited to, a smart card, different data rates may be employed when the device performing the method **400** communicates with the removable secure processor. In one embodiment, a fixed data rate may be used for all communications between the device and the removable secure processor. In another embodiment, the data rate may be variable dependent upon the type of content and/or the type of messages exchanged between the device and the removable secure processor. In further embodiments, different types of signaling may be employed to communicate between the device and the removable secure processor. For example, in embodiments where the removable secure processor is a smart card, low-voltage differential signaling (LVDS) may be employed.

In further embodiments, the method **400** may be performed simultaneously on different network content to process multiple network encrypted streams or multiple pieces of network encrypted content. For example, in a set-top-box environment, the device may be able to process multiple data streams at a time. For example, a set-top-box may allow a user to watch one channel while recording one or more other channels. In such embodiments, the set-top-box may simultaneously employ the method **400** on multiple streams to decrypt the network encrypted content. In such embodiments, the removable secure processor, e.g., smart card, is capable of simultaneously decrypting multiple network encrypted content streams and creating multiple different locally encrypted streams. In such embodiments, different network control words may be used to decrypt the different network encrypted content and different local control words may be used to create different locally encrypted content.

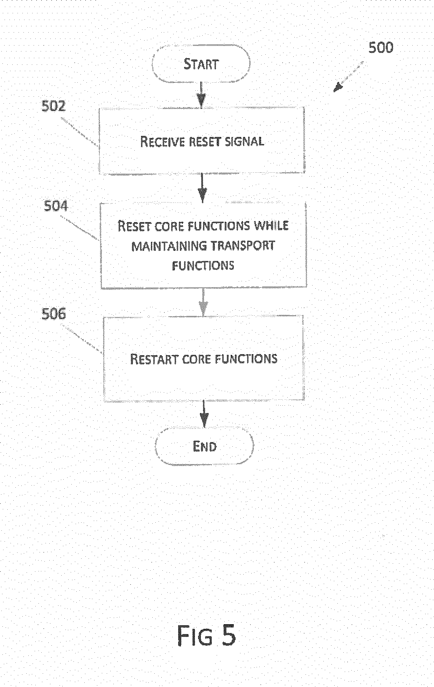

**FIG. 5** is an example of a method **500** that may be employed to reset functionality of a secure device, such as, for example, a smart card, while maintaining transport stream functionality. Flow begins at operation **502** where the secure device receives an instruction to reset. In examples , the instruction may indicate that core functionality are to be reset independently from transport functionality. For example, core functionality may relate to the operating instructions, e.g., the core software, for the operating of the secure device. For example, the core software may be reset to, e.g., perform a software upgrade, to recover from a malfunction, or due to a lack of synchronization, etc. However, because the secure device processes network encrypted streams, unlike prior solutions where network encrypted streams were processed by components that were not part of the secure device, the secure device must be reset without interrupting streamed data. In the examples described herein, if the secure device is completely reset, the processing of the streamed data may be interrupted during the reset. In embodiments, the signal received at operation **502** may indicate a partial reset (e.g., resetting only core functionality and/or software) or the secure device may make a determination to perform a partial reset.

Flow continues to operation **504** where the secure device resets the core functionality while maintaining the transport functionality. In examples , the components of the secure device that perform the core functionality may be reset while the components that perform the transport functionality continue to operate. As such, maintenance may be performed on the core functionality of the secure device without interrupting the processing of data streams received by the secure device. For example, while the core functionality of the secure device are reset, the secure device may still able to receive transport data, process the transport data (e.g., by performing the method **200** from **FIG. 2**), and provide the processed packets (e.g., locally encrypted content) to another device. By performing the partial reset, network encrypted content may still be decrypted and locally encrypted during a reset of the device, thereby providing the ability of the secure device to continually provide content while performing maintenance. Flow then continues to operation **506** where the core functionality of the secure device are restarted and the maintenance is completed.

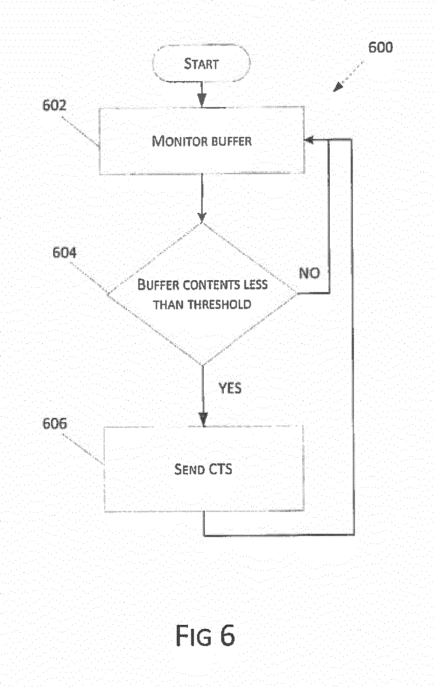

In examples , because the secure device is processing network data, e.g., the network encrypted content, variable bandwidth data is provided to the secure device. This differs from prior systems in which a secure device, e.g., a smart card, received a fixed bandwidth amount of data. In order to deal with variable bandwidth data, embodiments of the secure devices disclosed herein may perform a packet pacing algorithm. **FIG. 6** is an example of a packet pacing method **600** that may be employed by a secure device operating in a variable bandwidth environment.

The method **600** is a closed loop feedback mechanism whereby a secure device may provide a clear to send (CTS) message or signal to notify that the device communicating with the secure device, e.g., a set-top-box or system on a chip, is allowed to send additional packets of data to the secure device. The method **600** may be employed to ensure that the secure device is capable of extracting a variable amount of data from multiple fixed input streams while throttling the amount of effective data by employing one or more CTS messages. Sending a CTS message or signal by the secure device to a device it is communicating with triggers the device to send packets of interest (e.g., packets containing useful data such as transmission data, control data, etc.). When the secure device does not send a CTS message, the secure device may receive stuffing packets from the device it is communicating with.

The secure device may employ a first-in-first-out (FIFO) buffer to perform packet pacing. The secure device may monitor the FIFO buffer to control the packet pacing of the variable bandwidth data received by the secure device. For example, the secure device may monitor the capacity and/or fullness of the FIFO buffer. If the number of packets queued in the FIFO fall below a threshold, the secure device may send a CTS message to a device communicating with the secure device to trigger receipt of additional data. A low level of data may be maintained in the FIFO buffer to ensure minimal latency for queued live packets that have a high priority. During periods of high activity, the secure device may ensure that live packets get higher priority by maintaining a small FIFO buffer.

Flow begins at operation **602** where the FIFO buffer is monitored. Monitoring the FIFO buffer may comprise checking the number of items in the FIFO buffer.

Any method of monitoring a buffer or the contents of a buffer may be performed at operation **602**. Flow continues to decision operation **604**, where a determination is made as to whether the number of contents in the FIFO buffer is lower than a predetermined threshold. In one example , the threshold may be based upon processing time for a packet in the buffer. In another example , the threshold may be based upon a calculation. If the number of items in the FIFO buffer is lower than the threshold, **FIG. 6** shows that flow branches "YES" to operation **606** where a CTS message or signal is sent to trigger the receipt of additional data packets and flow returns to operation **602**. For example, the CTS message may be sent to a video processing device, a set-top-box, or other type of device instructing the device to send additional data to the secure processor. If the number of items is not lower than the threshold, **FIG. 6** shows that flow branches "NO" and returns to operation **602**. Although examples have been described with a FIFO buffer, other types of queues may be employed without departing from the scope of the present disclosure.

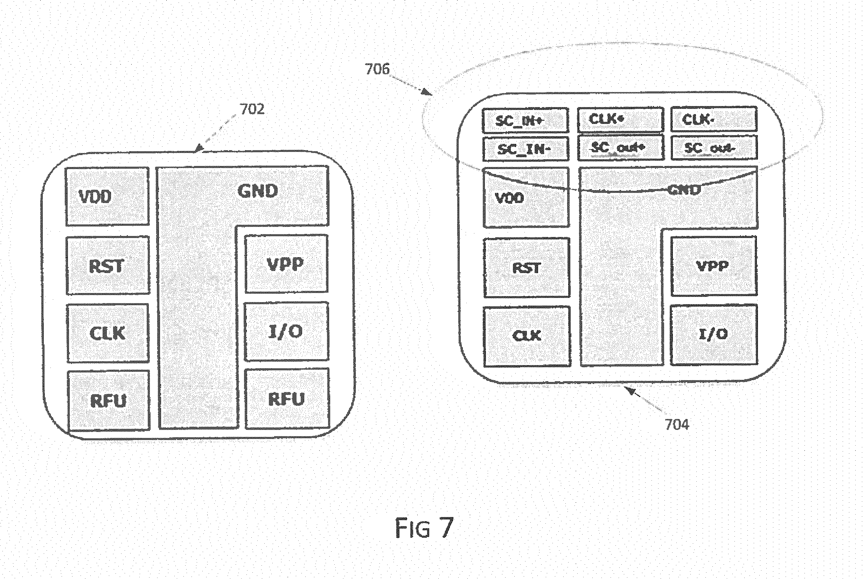

In embodiments where the secure processor is a removable component, the secure processor may be designed such that it is capable of working in legacy systems. In embodiments, the secure processor is a removable component that has a legacy form factor. For example, a smart card may be designed to support both ISO-7816 signals and signals for the Transport I/O system described herein. **FIG. 7** is an embodiment illustrating the compatibility between an ISO-7816 smart card and a smart card capable of supporting the systems and methods disclosed herein. Smart card **702** is an embodiment of an ISO-7816 compatible smart card. Smart card **704** is a smart card compatible with both ISO-7816 and the Transport I/O systems and methods disclosed herein. In the illustrated embodiment, smart card **704** includes all of the contacts necessary to be compatible with the ISO-7816 standard (e.g., supports a legacy form factor). Additionally, smart card **704** includes six contacts, identified by the ellipse **706** that may be used to perform the systems and methods described herein. In such embodiments, the smart card **704** may be capable of working with both existing systems (e.g., legacy devices deployed to the field) and Transport I/O capable systems.

In embodiments, the device performing the method **400** and/or the removable secure device may make a determination as to whether to operate in a legacy mode (e.g., an ISO-7816 mode) or in a Transport I/O system compatible mode at start up. In one embodiment, the determination may be made based upon a signal sent to the removable secure device at initialization. Further details regarding the making of such determination is provided in U.S. Patent Application Serial No. 13/184,831 entitled, "Multiple-Speed Interface," filed on July 18, 2011, which claims priority to U.S. Provisional Patent Application No. 61/364,854, filed on July 16, 2011, which is hereby incorporated by reference in its entirety.

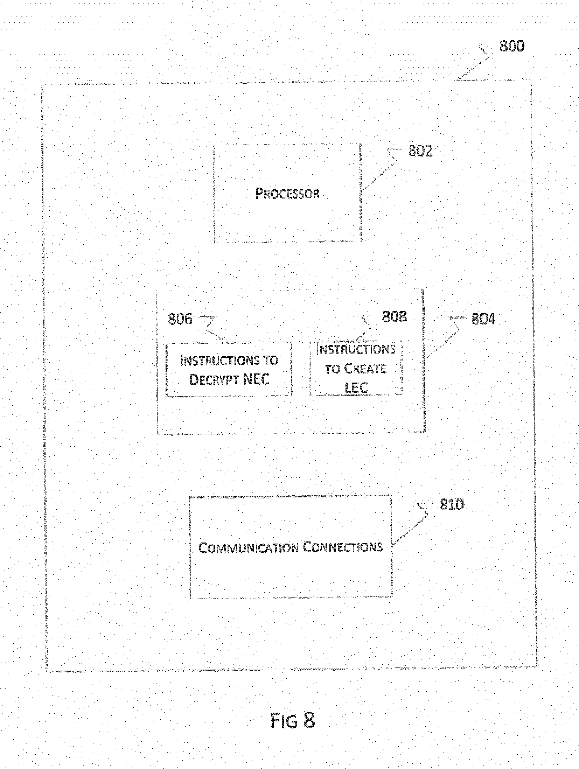

**FIG. 8** is an embodiment of a secure processing device **800** that may be employed with the systems or to perform the methods disclosed herein. In embodiments, the secure processing device may be a smart card. However, one of skill in the art will appreciate that any other type of secure device may be employed with the systems and methods disclosed herein. In embodiments, the secure processing device may be part of a device performing the method **400** described with respect to **FIG. 4****.** In another embodiment, the secure processing device **800** may be a removable component of a device performing the method **400**.

In embodiments, secure processing device **800** includes one or more processing units **802.** In some embodiments, one or more components of the methods described herein are performed by the one or more processing units **802**. For example, the one or more processing units **802** may be used to decrypt network encrypted content, create locally encrypted content, and create non-content data as described in the method **200** of **FIG. 2**.

Secure processing device **800** may also include memory **804**. Memory **804** includes, but is not limited to, RAM, ROM, EEPROM, flash memory or other memory technology, or any other tangible medium which is used to store information and which is accessed by secure processing device **800** and one or more processing units **802**. Memory **804** may store executable instructions to perform the methods disclosed herein. For example, memory **804** may include instructions to decrypt network encrypted content (NEC) **806**. Memory may also store the instructions to encrypt clear content to create locally encrypted content (LEC) **808**.

Secure processing device **800** may also contain communications connection(s) 810 that allow the device to communicate with other devices. Communication connection(s) **810** is an example of communication media. Communication media may embody a modulated data signal, such as a carrier wave or other transport mechanism and includes any information delivery media, which may embody computer readable instructions, data structures, program modules, or other data in a modulated data signal. The term "modulated data signal" means a signal that has one or more of its characteristics set or changed in such a manner as to encode information or a message in the data signal. By way of example, and not limitation, communication media includes wired media such as a wired network or direct-wired connection, and wireless media such as an acoustic, RF, infrared, and other wireless media. In embodiments, network encrypted content such may be received over communications connection(s) **810**. Locally encrypted content may be transmitted over communications connection(s) 810. In still further embodiments, the instructions to perform the Transport I/O methods described herein may be received via communications connection(s) **810**. For example, a head-end may update secure processing device **800** with instructions to perform the methods disclosed herein. The instructions may be stored in memory **804**. Communications connection(s) **810** thereby allows a head-end to update smart cards deployed in the field with instructions to perform the methods disclosed herein. Communications connections also provide the secure processing device **800** with the ability to receive network encrypted content from a device and return locally encrypted content to the device. In embodiments, communication connections may be pads on a smart card, such as, but not limited to, the pads identified as Transport I/O capable pads **706 in** **FIG. 7****.**

Although the embodiment of the secure processing device **800** is illustrated as having memory **804** that includes instructions to perform the methods disclosed herein, in alternate embodiments, the instructions to perform the methods disclosed herein may be performed by an application specific integrated circuit (ASIC) that is part of the secure processing device **800**.

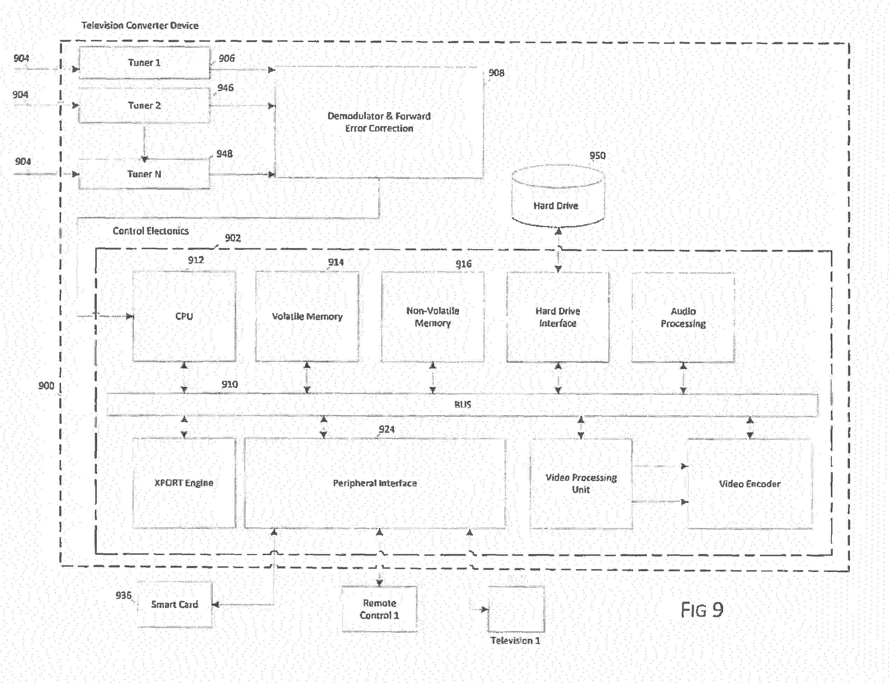

**FIG. 9** is an embodiment of a set-top-box that may be used to perform the Transport I/O system methods and be part of the systems disclosed herein. In another embodiment, different recipient devices such as, but not limited to, a smart phone, a tablet computer, a laptop, or any other type of device may be employed containing some of the components illustrated in **FIG. 9****.** While **FIG. 9** is illustrated with various components, many of the components are known to the art and do not need explanation. Only the components that may be used to perform the methods disclosed herein are described. The signal **904** that arrives at the set-top-box **900** may undergo extensive processing. The television converter **900** may include one or more tuner devices **906**, 946, 948 that may receive a signal **904**. Signal **904** may be a satellite signal, a cable signal, or any other type of signal received over a wired or wireless network. In this embodiment, tuner devices **906, 946, 948** acquire a signal **904** from a head-end or content provider. Tuner devices **906, 946, 948** may initially process the signal **904**. Signal 904 may be a data stream that comprises network encrypted content (e.g., one or more multiple network encrypted streams), multiple clear content (e.g., one or more multiple clear content streams) and/or metadata containing information about the data stream or the multiple encrypted and/or clear streams that make up the data stream. Tuner device **906, 946, 948** may also receive subscriber commands in the form of signals from control electronics unit **902**. Signals from control electronics unit **902** may include, but is not limited to, a signal to tune to a transponder as part of the process of selecting a certain channel for viewing on a peripheral device. One skilled in the art would recognize that the tuner devices **906, 946, 948** may include fewer, more, or different components. The signal **904** may include content encoded by a network control word. The signal **904** may also include one or more ECMs and EMMs.

After receiving the signal **904**, one of the first steps may be to demodulate **908** the signal **904**. The signal **904** may arrive as an analog signal that "carries" data (e.g., data is modulated onto the analog signal). Demodulation **908** may be accomplished by reversing the modulation process. Modulation can be done in several ways. Modulation may include amplitude modulation (AM) or frequency modulation (FM). If the carried data is digital, modulation methods include, but are not limited to, biphase-shift keying (BPSK), quadraphase-shift keying (QPSK), or eight-phase shift keying (8PSK). One skilled in the art will recognize that other methods of modulating and demodulating the signal 904 may be possible. Another one of the first steps may also be to error correct **908** signal **904**. One example of error correcting **908** is forward error correction (FEC). FEC 908 may include, but is not limited to, inspecting parity bit or bits that may accompany signal **904**. One skilled in the art will recognize that many methods for error correcting are possible. For the purposes of discussion, an embodiment using digital data will be discussed below. However, one skilled in the art will recognize that systems with analog data or combined analog and digital data are also possible and contemplated herein.

In embodiments, set-top-box **900** contains control electronics unit **902** that receives signal **904**. In embodiments, the control electronics unit **902** may comprise a smart card interface. One skilled in the art will recognize that control electronics **902** may receive other signals, including, but not limited to, signals from a cable, satellite, or broadcast television distributor. In this embodiment, control electronics unit **902** includes discrete electronic components combined into a single circuit with a shared bus **910**. In other embodiments, control electronics unit **902** may be configured differently. For example, one or more of the control electronics unit **902** components in set-top-box **900** may be combined or omitted. As a further example, one or more of the control electronics unit **902** components in set-top-box **900** may not share a bus **910**, but may nonetheless be operatively connected by some other means. One skilled in the art will recognize that other configurations of set-top-box **900** and control electronics unit **902** are possible and within the scope of this invention. One skilled in the art will further recognize that some components of set-top-box **900** and control electronics unit **902** may be implemented in hardware or software. The control electronics unit **902** may operate under the control of a software program, firmware program, or some other program stored in memory or control logic. One skilled in the art will also recognize that the control electronics unit **902** may include other electronic components or structures to mediate or process signals.

Control electronics unit **902** may contain one or more central-processing-units (CPUs) **912** or processors. In this embodiment, control electronics unit **902** contains a single CPU **912** that is operatively connected to the shared bus. In this embodiment, CPU **912** may be used, among other things, for logical operations for set-top-box **900** functions including, but not limited to, channel selection, recording control, EPG display and control and system maintenance. One skilled in the art will recognize that the CPU **912** may be integrated with memory or other discrete electronics components. In embodiments, CPU **912** may be used to perform the systems and methods disclosed herein. For example, CPU **912** may be used to perform a method of decrypting locally encrypted content as described with respect to **FIG. 3****.** However, in embodiments, local decryption may be performed by other components, such as a dedicated crypto engine (not shown). One of skill in the art will appreciate that although specific components are described with respect to **FIG. 9**, the system and methods disclosed herein may be performed by other components or other types of devices.

Control electronics unit **902** may contain one or more volatile memory components **914**. Volatile memory components **914** may include, but are not limited to, one or more SDRAM memory chips. Similarly, control electronics unit **902** may also contain one or more non-volatile memory components **916**. Non-volatile memory **916** may include one or more memory chips, including, but not limited to, ROM, , EEPROM, and Flash. One skilled in the art will recognize that volatile memory **914** and non-volatile memory **916** may be integrated within other electronics components. One skilled in the art will also recognize that other memory components may be included within set-top-box **900** and control electronics unit **902**. One skilled in the art will recognize that memory **914, 916** may be used for many purposes, including, but not limited to, storing EPG data and storing data for use by CPU **912**. In embodiments, the Volatile memory components **914** and/or one or more non-volatile memory components **916** may be used to store the instructions to perform methods **300** and **400** disclosed herein. Non-volatile memory **916** may be used to store locally encrypted content or clear content. In other embodiments, hard drive **950** may be used to store locally encrypted content or clear content.

A set-top-box **900** may be connected to one or more peripheral electronic devices through peripheral interface **924**. These peripheral devices may include a smart card **936**. In embodiments, the smart card **936** acts as a conditional access system. In such embodiments, the smart card **936** performs the methods **200** and **400** disclosed herein. In embodiments, smart card **936** may be a smart card such as smart card **504** that is capable of supporting both a legacy mode of operation and a Transport I/O mode of operation. In still further embodiments, smart card **936** may have the components described with respect to **FIG. 8****.** Peripheral interface **924** may also act as an I/O connection to provide the clear content to a display device, such as, but not limited to, a television and speakers.

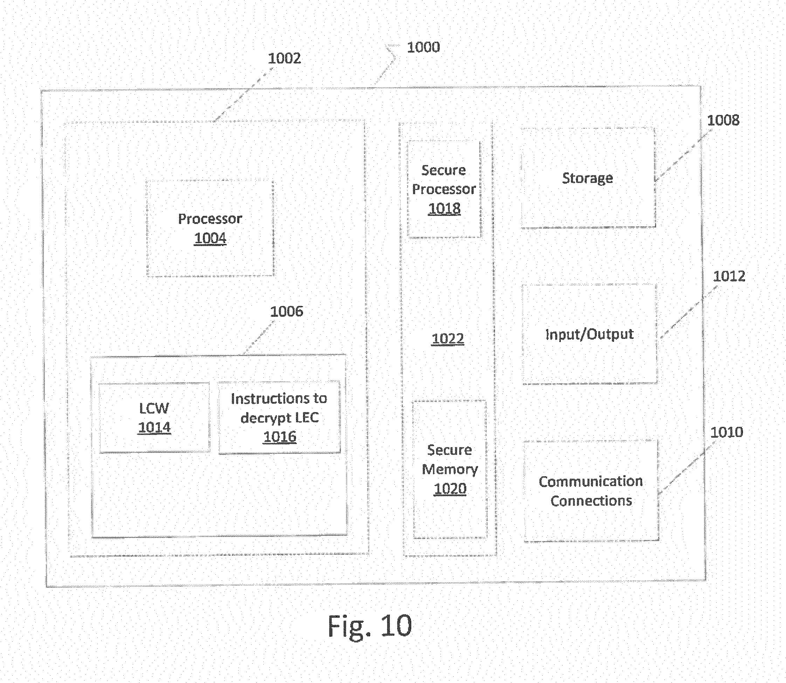

With reference to **FIG. 10**, an embodiment of a computing environment for implementing the various embodiments described herein includes a computer system, such as computer system **1000**. Any and all components of the described embodiments (such as the DVR, the content storage sever, a laptop, mobile device, personal computer, a smart phone, a secure processing device, etc.), may execute as or on a client computer system, a server computer system, a combination of client and server computer systems, a handheld device, and other possible computing environments or systems described herein. As such, a basic computer system applicable to all these environments is described hereinafter.

In its most basic configuration, computer system **1000** comprises at least one processing unit or processor **1004** and system memory **1006**. The most basic configuration of the computer system **1000** is illustrated in **FIG. 10** by dashed line 1002. In some embodiments, one or more components of the described system are loaded into system memory **1006** and executed by the processing unit **1004** from system memory **1006**. Depending on the exact configuration and type of computer system **1000**, system memory **1006** may be volatile (such as RAM), non-volatile (such as ROM, flash memory, etc.), or some combination of the two.

Additionally, computer system **1000** may also have additional features/functionality. For example, computer system **1000** may include additional storage media **1008**, such as removable and/or non-removable storage, including, but not limited to, magnetic or optical disks or tape or solid state storage. In some embodiments, software or executable code and any data used for the described system is permanently stored in storage media **1008**. Storage media **1008** includes volatile and non-volatile, removable and non-removable media implemented in any method or technology for storage of information such as computer readable instructions, data structures, program modules, or other data.

System memory **1006** and storage media **1008** are examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage, other magnetic storage devices, solid state storage or any other tangible medium which is used to store the desired information and which is accessed by computer system **1000** and processor **1004**. Any such computer storage media may be part of computer system **1000**. In some embodiments, system memory **1006** and/or storage media **1008** may store data used to perform the methods or form the system(s) disclosed herein. In other embodiments, system memory **1006** may store information such as the local control word **1014** and logic **1016** to perform the methods of decrypting locally encrypted content as described herein.

Computer system **1000** may also contain communications connection(s) **1010** that allow the device to communicate with other devices. Communication connection(s) **1010** is an example of communication media. Communication media may embody a modulated data signal, such as a carrier wave or other transport mechanism and includes any information delivery media, which may embody computer readable instructions, data structures, program modules, or other data in a modulated data signal. The term "modulated data signal" means a signal that has one or more of its characteristics set or changed in such a manner as to encode information or a message in the data signal. By way of example, and not limitation, communication media includes wired media such as a wired network or direct-wired connection, and wireless media such as an acoustic, RF, infrared, and other wireless media. In an embodiment, content and metadata may be transmitted over communications connection(s) **1010**.

In some embodiments, computer system **1000** also includes input and output connections **1012**, and interfaces and peripheral devices, such as a graphical user interface. Input device(s) are also referred to as user interface selection devices and include, but are not limited to, a keyboard, a mouse, a pen, a voice input device, a touch input device, etc. Output device(s) are also referred to as displays and include, but are not limited to, cathode ray tube displays, plasma screen displays, liquid crystal screen displays, speakers, printers, etc. These devices, either individually or in combination, connected to input and output connections **1012** are used to display the information as described herein. All these devices are well known in the art and need not be discussed at length here. In further embodiments, the input and output connections **1012** may be used to communicate with a removable secure processor, such as, but not limited to, a smart card.

In further embodiments, computer system **1000** may include a secure processor 1018 and secure memory **1020** that may be used to perform some of the methods disclosed herein. In embodiments, the secure processor **1018** and secure memory **1020** of the computer system **1000** may comprise a secure area **1022** that is not generally accessible by the other components of computer system **1000** or by other processes executing on the computer system **1000**. In embodiments, secure memory may store instructions to decrypt network encrypted content and create locally encrypted content as described with respect to **FIG. 2**. Such instructions may be executed by the secure processor **1018**. In such embodiments, network control words may remain within the secure area **1022**, thereby reducing the chance of interception and sharing by unauthorized parties.

In some embodiments, the components described herein comprise such modules or instructions executable by computer system **1000** that may be stored on computer storage medium and other tangible mediums and transmitted in communication media. Computer storage media includes volatile and non-volatile, removable and non-removable non-transitory media implemented in any method or technology for storage of information such as computer readable instructions, data structures, program modules, or other data. Combinations of any of the above should also be included within the scope of readable media. In some embodiments, computer system **1000** is part of a network that stores data in remote storage media for use by the computer system **1000**.

Sometimes, conditional access systems have required the use of bulky and expensive form factors. For example, the traditional DVB-CI Conditional Access Module (CAM) uses a PCMCIA (PCCARD) form factor and connector along with a standard ISO-7816. The number of devices capable of receiving and presenting content (e.g., video and/or audio content) continues to grow. For example, many smartphones, laptops, tablets, phablets, televisions, and other devices are capable of receiving and presenting content to a user. Generally, such devices do not include traditional conditional access system interfaces due to the form factor and cost of such interfaces. As such, content providers and distributers cannot rely on traditional conditional access systems (e.g., the use of smart cards, PC cards, etc.) to protect their content on these devices.

Furthermore, due to cost and form factor issues, many device manufacturers are unwilling to include traditional conditional access system interfaces. However, many of such devices include other standard interfaces and/or connections. The embodiments disclosed herein leverage standard connections to employ conditional access smartchips capable of interacting with many different types of devices. One such standard interface is the USB 3.0 interface. However, while the embodiments disclosed herein describe the use of a smartchip with a USB 3.0 connector, one of skill in the art will appreciate that other interfaces and/or connectors may be employed by the embodiments disclosed herein without departing from the scope of this disclosure.

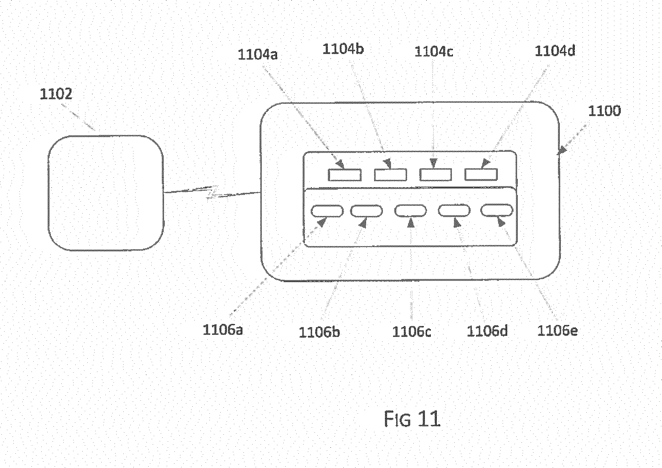

**FIG. 11** illustrates an exemplary connector **1100** that may be used in conjunction with a smartchip **1102**, such as a Transport I/O capable smartchip, to perform conditional access. In embodiments, the smartchip **1102** may perform the methods disclosed herein. For the sake of illustration, the exemplary connector **1100** is described as a USB 3.0 connector. However, while the exemplary connector **1100** is described using a USB 3.0 connector, one of skill in the art will appreciate that other standard connections (e.g., a USB 2.0 connection, a mini USB connection,
etc.) may be utilized by the embodiments disclosed herein to perform Transport I/O conditional access, Other standard connectors (a SCSI connection, IEEE 1394 connections) may be utilized by examples to perform Transport I/O conditional access. The other standard connectors may be modified to transmit data and/or messages during Transport I/O conditional access.

Exemplary connector **1100** includes 9 signal pins. In embodiments, signal pins **1104a-d** may operate and/or be utilized in accordance with the USB 2.0 protocol. For example, signal pin **1104a** may be utilized as a ground pin, signal pin **1104b** may be utilized as a Data+ pin, signal pin **1104c** may be utilized as a Data- pin, and signal pin **1104d** may be utilized as a VCC pin, as defined by the USB 2.0 standard. Signal pins **1106a-e** may be signal pins that may operate and/or be utilized in accordance with the USB 3.0 protocol. However, in embodiments, a smartchip **1102** capable of performing the Transport I/O methods disclosed herein may map pins **1106a-e** to the smart card contacts **706** that are included as part of the Transport I/O smart card 704 described with respect to **FIG.** 7. For example, the USB 3.0 specification defines pins **1106a** and **1106b** as the Receive- and Receive+ pins, respectively. A smartchip **1102** capable of performing the embodiments disclosed herein, however, may utilize pins **1106a** and **1106b** as the SC_out- and SC_out+ contacts, respectively, as described with respect to smart card **704 of** **FIG. 7**. Similarly, the USB 3.0 protocol defines pins **1106d** and **1106e** as the Transmit- and Transmit+ pins, respectively. Again, in embodiments, a smartchip **1102** capable of performing the embodiments disclosed herein, however, may utilize pins **1106d** and **1106e** as the SC_IN- and SC_IN+ contacts, respectively, that are part of smart card **704 of** **FIG. 7**. As such, a smartchip **1102** may leverage the USB 3.0 form factor to be part of a Transport I/O system and/or to perform the Transport I/O methods disclosed herein.

Exemplary connector **1100**, however, does not have enough pins to directly map to all of the Transport I/O contacts **706** illustrated in **FIG. 7****.** After mapping pins **1106a** and **1106b** to SC_out- and SC_out+ and pins **1106d** and **1106e** as the SC_IN- and SC_IN+ pads discussed with respect to smart card **704** (**FIG. 7**), only pin 1106c (defined as a ground by the USB 3.0 standard) remains unmapped. However, smart card **704** (**FIG. 7**) includes two additional pads, the CLK+ and CLK- pads. The CLK+ and CLK-pads are used for synchronization of data between smart card 404 and a set-top-box, a system on a chip (SoC), or any other type of device capable of receiving and modifying content. In embodiments, because the content (e.g., video content, television content, audio content, etc.) is continually streamed between smart card **704** (**FIG. 7**) and another device, a clock signal may be used to synchronize communications between the smart card **704** (**FIG. 7**) and another device. However, exemplary connector **1100** does not have enough available pins to transmit a clock signal in a similar manner as the smart card **704** (**FIG. 7**). In order to synchronize communication between a smartchip **1102** and a SoC, a device, a laptop, etc., via connector **1100**, a clock recovery mechanism may be employed. In embodiments, a smartchip **1102** utilizing connector **1100** to perform the Transport I/O embodiments disclosed herein may transmit and receive self-clocking data. In embodiments, the clock recovery mechanism may utilize phase-locked looping, 8B/10B encoding, eight-to-fourteen modulation, or any other type of clock recovery technique known to the art.

When a USB 3.0 device initializes (e.g., when it is first connected), the USB 2.0 pins (e.g., pins **1104a-d**) are used to establish an initial connection. Upon initialization, the USB 3.0 device negotiates with the host to which it is connected to determine whether the host supports USB 3.0. If both devices support USB 3.0, the USB device and the host agree to enable the USB 3.0 pins (e.g., pins **1106a-e**) and communications between the USB device and the host proceeds according to the USB 3.0 standard. A Transport I/O smartchip and/or device may also perform a negotiation to see if both devices are capable of supporting Transport I/O (or other types of) conditional access. For example, when a smartchip **1102** initially connects to a host device using connector **1100**, pins **1104a-e** may be used to establish a connection according to the USB 2.0 protocol. However, after the initial connection, instead of performing negotiation to determine whether USB 3.0 is supported by the host, the negotiation may be used to determine whether the host supports the Transport I/O embodiments disclosed herein. If so, pins **1106a** and **1106b** may be configured to transmit and/or receive data in a similar manner as the SC_out- and SC_out+ pads of the smart card 704 (**FIG. 7**). For example, network encrypted content may be transmitted to the smartchip using pins **1106a** and **1106b**. Similarly, pins **1106d** and **1106c** may be configured transmit and/or received data in a similar manner as the SC_IN- and SC_IN+ pads of the smart card **704** (**FIG. 7**). For example, locally encrypted content may be transmitted from the smartchip **1102** to the host using pins **1106d** and **1106c**.

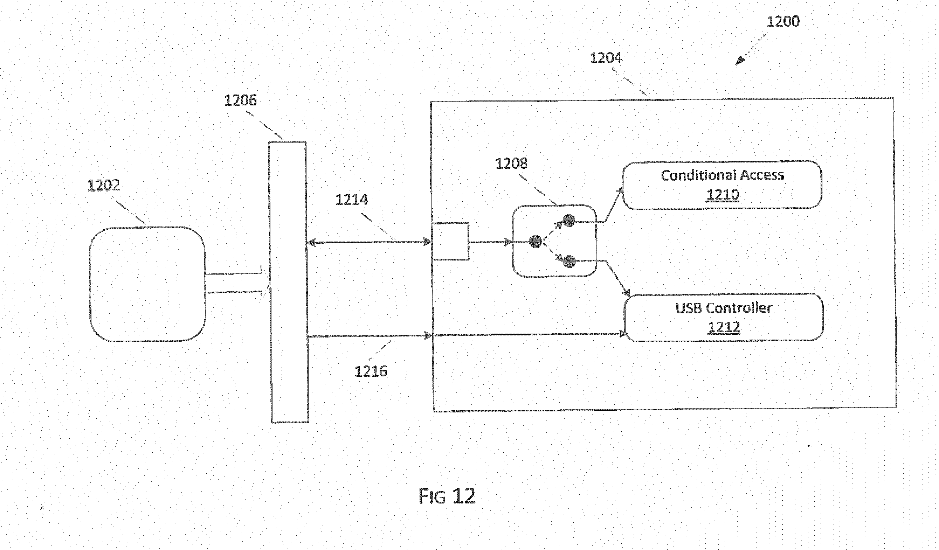

**FIG. 12** is an embodiment of a conditional access system **1200** utilizing a connector **1206**. In embodiments, a smartchip **1202** may be connected to a conditional access SoC **1204** via a connector **1206**. For ease of illustration, connector **1206** is described as a USB 3.0 connector in this disclosure. However, one of skill in the art will appreciate that other standard connections (e.g., a USB 2.0 connection, a mini USB connection, a SCSI connection, an IEEE 1394 connection, etc.) may be utilized with the embodiments disclosed herein. When the smartchip **1202** connects to the conditional access SoC **1204** via connector **1206**, the smartchip **1202** and the conditional access SoC 1204 begin a negotiation to determine whether both devices support a conditional access mode. When both the smartchip **1202** and the conditional access SoC **1204** support a similar conditional access protocol (e.g., Transport I/O), then the high speed line(s) **1214** (e.g., communication lines using pins **1106a-c** of **FIG. 11**), are configured to operate according to the conditional access protocol (e.g., Transport I/O protocol) and data path connector **1208** routes communications between a Conditional Access Controller **1210** and the conditional access smartchip **1202**. Under such conditions, network encrypted content may be transmitted to the smartchip **1202** via communication lines **1214** and locally encrypted content or, in examples , clear content, may be returned to the conditional access SoC via communication lines **1214**. In such embodiments, communication line(s) **1216** may utilize the USB 2.0 pins to transmit additional data (e.g., command and control packets, reset signals, etc.) using the USB 2.0 protocol.

In alternate embodiments, if smartchip **1202** and conditional access SoC **1204** do not support the same conditional access protocol, data path connector **1208** routes communications via high speed line **1214** to USB controller **1212** and operations are performed according to the USB Protocol, e.g., data may be transferred between a device that includes conditional access SoC **1204** and a USB device. In alternate embodiments in which the connector **1206** uses a different interface and/or protocol (e.g., SCSI, IEEE 1394, etc.) data path connector **1208** may route data to a controller for that particular interface and/or protocol. As such, embodiments of the present disclosure provide that conditional access SoC **1204** that may be included in any type of device (e.g., a laptop, tablet, smartphone, television, etc.) and connected to an external device via a standard connection, such as a USB 3.0 interface, to facilitate connections to both conditional access components (e.g., smartchip **1202**), and other types of components (e.g., a USB stick).

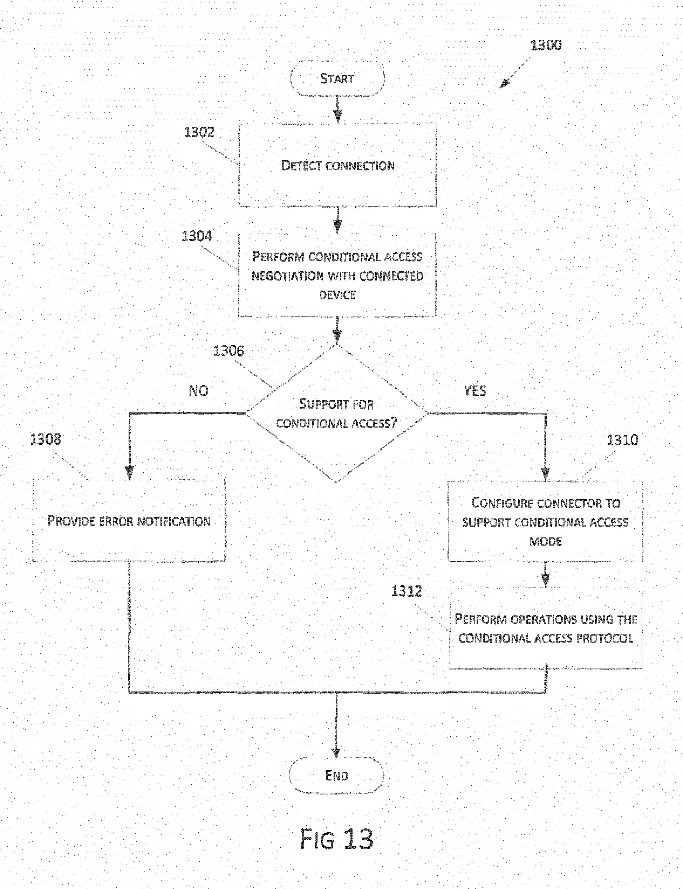

**FIG. 13** is an embodiment of a method **1300** for determining whether or not to configure a connector for a conditional access mode. The method **1300** may be implemented using software, hardware, or a combination of software and hardware. In embodiments, the method **1300** may be performed by a conditional access SoC, such as smartchip **1202** from **FIG. 12**. Flow begins at operation **1302** where a connection to another device is detected. For example, the connection may be detected by receiving a communication signal or power from an external device. One of skill in the art will appreciate that any method for detecting a connection known to the art may be performed at operation **1302**. Flow continues to operation **1304**, where negotiation takes place with the device to which the smartchip is connected. In embodiments, operation **1304** may include the smartchip exchanging information with the device that identifies whether or not the device supports conditional access protocol and/or whether the supported conditional access protocols are the same. Flow continues to decision operation **1306** where, based upon the negotiation, a determination is made as to whether the connected device and smartchip support a common conditional access protocol. If the device does not support conditional access, or does not support the same conditional access protocol, then flow branches NO to operation **1308** and an error notification may be generated or otherwise provided indicating that the device does not support conditional access. Alternatively, returning to decision operation **1306**, if the device and the smatchip support the same conditional access protocol, such as, for example, the Transport I/O embodiments disclosed herein, then flow branches YES to operation **1310**. At operation 1310, the connector is configured to support conditional access mode. For example, if the connector is a USB 3.0 connector, referring back to the example connector in **FIG. 11**, pins **1106a** and **1106b** may be configured as SC_out- and SC_out+ connections and pins **1106c** and **1106d** may be configured as the SC_IN- and SC_IN+ connections. Flow then continues to operation 1312, where operations are performed in accordance with the conditional access protocol. For example, at operation **1312**, a Transport I/O smartchip (such as the exemplary smartchip **1102** of **FIG. 11**) may receive network encrypted content via pins **1106a** and **1106b (****FIG. 11****)**, decrypt the network encrypted content, perform local encryption, and provide locally encrypted content via pins 1106c and **1106d** (**FIG. 11**).

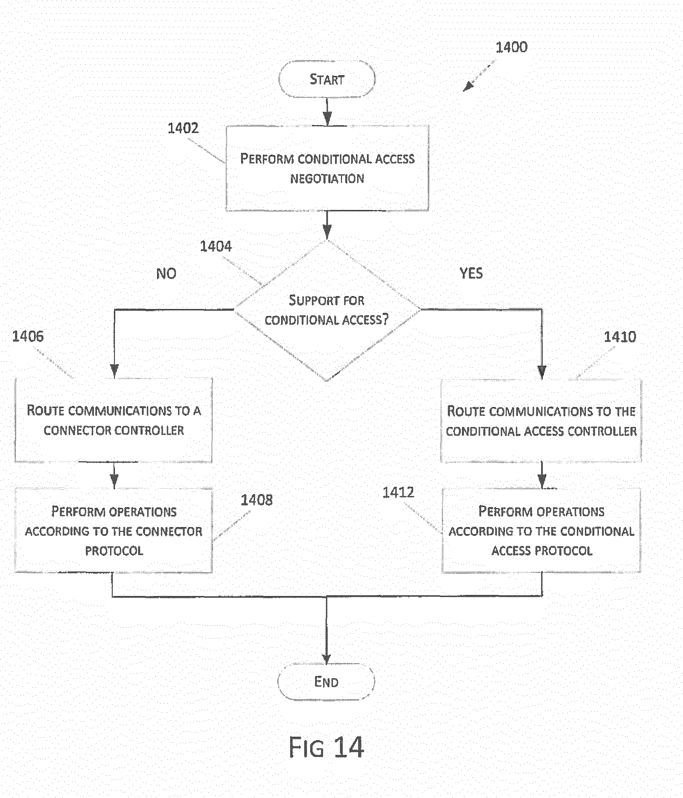

**FIG. 14** is an embodiment of a method **1400** for determining whether or not to perform conditional access operations. The method **1400** may be implemented using software, hardware, or a combination of software and hardware. In embodiments, the method **1400** may be performed by a device that is capable of connecting to a conditional access smartchip. In alternate embodiments, the method **1400** may be performed by a conditional access SoC. Flow begins at operation **1402**, where negotiation is performed between the device or SoC performing the method **1400** (such as device **1204** in **FIG. 12**) and an external device connected to the device or SoC. In embodiments, operation **1402** may include the exchange of information that identifies whether or not device supports conditional access protocol and/or whether the supported conditional access protocols are the same. Flow continues to decision operation **1404** where, based upon the negotiation, a determination is made as to whether the connected device (e.g, a smartchip) supports a conditional access protocol. If the connected device does not support conditional access, or does not support the same conditional access protocol, then a determination is made that the connected device is not a smartchip or is otherwise incapable of performing conditional access. Upon making such a determination, flow branches NO to operation **1406** and communication with the external device are routed to a connector controller. In embodiments, the connector controller may be configured to perform operations according to a protocol based on the type of connector used (e.g., USB 2.0, USB 3.0, SCSI, IEEE 1394, etc.). Flow then continues to operation **1408** where operations are performed using the connector protocol. For example, if the connector is a USB 3.0 connector, operations may be performed in accordance with the USB 3.0 protocol at operation **1408**.

Returning to decision operation **1404**, if the device does support a conditional access protocol, flow branches YES to operation **1410**. At operation **1410**, communications with the external device may be routed to a conditional access controller (such as controller **1210** in **FIG. 12**). For example, communications with the external device may be routed to a Transport I/O controller. Flow then continues to operation **1412** where operations are performed according to the conditional access protocol. For example, at operation **1412**, network encrypted content may be sent to the external device and locally encrypted content may be received from the external device.

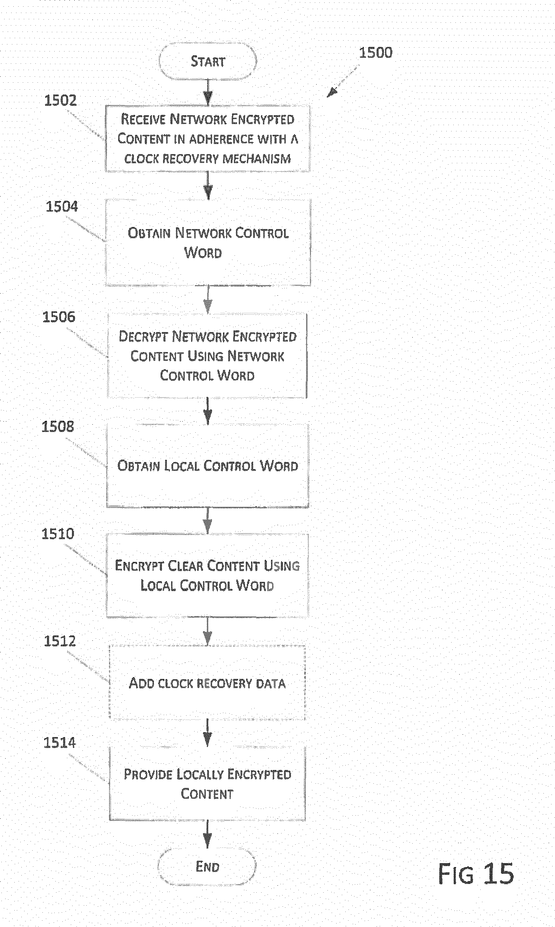

**FIG. 15** is a flowchart representing an embodiment of a method **1500** of performing network content decryption via a standard connector, such as, for example, a USB 3.0 connector. In embodiments, the method **1500** may be performed by a secure processor. In examples, the method 1500 may be performed by a secure device. In further embodiments, the method 1500 may be performed by a smartchip, such as smartchip **1102** of **FIG. 11****.** In embodiments, the method **1500** may be performed during operation **1312** of **FIG. 13**. The method 1500 may be implemented using software, hardware, or a combination of software and hardware. Flow begins at operation **1502** where the network encrypted content is received by the secure device. In embodiments, network secure content may be content encrypted using a NCW. The NCW may be a common control word or encryption key that is used to encrypt and decrypt content sent to multiple users or subscribers. In one example , the network encrypted content may be a single stream of data. In embodiments, the network encrypted content may contain multiple network encrypted streams, such as network encrypted elementary streams. Network encrypted elementary streams may be streams that contain audio data, video data, closed captioned data, or any other type of data. A network encrypted elementary stream may consist of compressed data from a single source, such as a particular network or channel. In embodiments where the network encrypted content may contain multiple network encrypted elementary streams, one or more network encrypted elementary streams may be individually received at operation **1502**. However, in alternate embodiments, the network encrypted content comprising multiple network encrypted elementary streams may be received at operation 1502. In such embodiments, individual network streams may be filtered out, e.g., by performing PID filtering or other type of filtering, to isolate one or more individual network encrypted elementary streams at operation **1502**.

As previously discussed, in embodiments, the connector may not have enough connection points (e.g., pins) to map to all of the pads of a Transport I/O smart card (e.g., smartcard **704** of **FIG. 7**). As such, the network encrypted content received at operation **1502** may be received in a format in accordance with a clock recovery mechanism. Different clock recovery mechanisms may be employed with the systems and methods disclosed herein. For example, embodiments disclosed herein may be practiced with different clock recovery mechanisms including, but not limited to, phase-locked looping, 8B/10B encoding, eight-to-fourteen modulation, or any other type of clock recovery technique known to the art. In some embodiments, clock recovery data may be included with the network encrypted content received at operation **1502**. In embodiments, the type of clock recovery data included with the network encrypted content may be based upon the type of clock recovery mechanism employed. In embodiments, the clock recovery data received as part of the network encrypted content may be used by the device performing the method **1500**, e.g., a smartchip, to synchronize communications.

Upon receiving the network encrypted content, flow continues to operation **1504** where the network control word is obtained. In one embodiment, the network control word may be a control word provided by the content supplier, such as, but not limited to, a head-end or a server transmitting the content. In embodiments, the network control word may be previously known by the device performing the method **1500**. In another embodiment, the network control word may be received by the device. In such embodiments, the network control word may be encrypted, and operation **1504** may include decrypting the network control word. For example, in embodiments, the network control word may be obtained by decrypting an ECM that contains the network control word. The ECM may be decrypted using information from another message, such as an EMM. While the ECM and EMM messages are part of the DVB architecture, one of skill in the art will appreciate that other content delivery systems and architectures may be employed with the systems and methods disclosed herein.

Flow continues to operation **1506** where the network encrypted content (e.g., a network encrypted elementary stream or multiple network encrypted elementary streams) is decrypted using the network control word. In one embodiment, a single network control word may be used to decrypt the network encrypted content. In alternate embodiments, multiple control words may be used to decrypt the network encrypted content such as, for example, when the network encrypted content comprises multiple network encrypted elementary streams that have each been encrypted using a different network control word. In such embodiments, multiple network control words may be obtained at operation **1504** and then used to decrypt multiple network elementary streams at operation **1506**. However, in other aspects, a single network control word may be used to encrypt multiple network elementary streams. In such embodiments, a single network control word may be used to decrypt the multiple network encrypted elementary streams. Decryption of the network encrypted content at operation **1506** may result in clear content, that is, content that is not protected by encryption. Because operations **1502-1506** may be performed by a secure device or secure processor, such as, but not limited to, a smart card and/or a smartchip, the network control word remains on the secure device. By maintaining the network control word on the device, an unauthorized subscriber cannot intercept the network control word that is transmitted between the smatchip and a device, such as a set-top-box, thereby impeding access to content by an unauthorized subscriber. In examples not shown in **FIG. 15** the clear content may be provided by the secure processor (e.g., a smartchip) for display and/or storage after decryption step **1506**. However, in the illustrated embodiment, an additional layer of protection may be added by performing local link encryption. In embodiments, local link encryption may comprise the re-encryption of the clear content using a local control word (LCW). The local control word may be an encryption key that is unique to a specific device. For example the LCW may be an encryption key that is only shared with the particular device (e.g., a television, computer, etc.) that the smartchip performing the method **1500** may be in communication with. In alternate embodiments, for example, when the secure processor is communicating with another type of device, such as, but not limited to, a smartphone, a laptop, a tablet, etc., the LCW may be an encryption key that is only shared with the particular device communicating with the secure processor. In embodiments, different types of encryption modes may be performed for local link encryption. In one embodiment, not all of the data representing the content may be encrypted using local link encryption. For example, transport mode encryption may be used. In embodiments transport mode encryption comprises a determination as to which bytes of data to encrypt based upon an MPEG2 transport encryption. In another embodiment, Bulk Mode encryption may be performed. In Bulk Mode encryption, all bytes representing the data may be encrypted during local link encryption. Bulk Mode encryption may be utilized to exchange data between devices in a secure manner. For example, Bulk Mode encryption may be used to mix transport input (e.g., content) with internal data that is used by the one or more components participating in encryption/decryption of content. In further embodiments, Bulk Mode encryption may be utilized to support other types of content streams that may provide additional features, such as Internet Protocol television (IPTV) content streams. Selection of the encryption mode may be based upon data that is present in the content or a data stream that includes the content. For example, one or more bits may be a part of or added to the clear content to identify an encryption mode to perform during local link encryption. Furthermore, in embodiments, the encryption algorithm performed during local link encryption may be compliant with the ATIS-08000006 standard. However, one of skill in the art will appreciate that any type of encryption algorithm may be used for local link encryption, so long as the same encryption algorithm is available on both the smartchip and the connected device. In embodiments, control packets defining the type of encryption may be transmitted to the secure device using different connections from the connections used to receive the network encrypted content. For example, if a USB 3.0 connector is used, then control packets may be sent using the USB 2.0 pins while network encrypted and locally encrypted content are streamed using the USB 3.0 pins.

In embodiments, a key setup used to select a key to be used for local link encryption may take place across security boundaries. For example, a key exchange may be made between a smartchip and a connected device as part of the key setup. An exchanged key may be generated by a secure device, such as a smartchip, and transmitted to a specific device that is communicating with the secure device. Because the local link encryption key is specific to a single device, and not a network transmission, interception of the local link encryption key does not provide an unauthorized user the ability to globally access the broadcasted network content. In embodiments, multiple keys may be used for local link encryption. For example, a smartchip may be able to simultaneously process multiple input streams and output multiple locally encrypted streams. In such embodiments, each locally encrypted stream may be encrypted using a unique local link encryption key. However, in other embodiments, the same local link encryption key may be used to encrypt each of the locally encrypted streams. In embodiments, the key exchange may be transmitted using different connections from the connections used to receive the network encrypted content. For example, if a USB 3.0 connector is used, then the USB 2.0 pins may be utilized for key exchange while network encrypted and locally encrypted content are streamed using the USB 3.0 pins.

Flow continues to operation **1508** where a local control word is obtained. A local control word may be any type of encryption key. In embodiments, the local control word may be an encryption key that is specific to a target device. In embodiments, the local control word may be obtained from ordinary software registers, a hardware key ladder, a random key generator, or from any other source. In one embodiment, the local control word may be dynamically generated and shared with a recipient device. In such embodiments, the key may be generated based upon characteristics of the device. In embodiment, multiple keys may be selected during obtain operation **1508**. For example, two keys may be selected from a key ladder. A key ladder may store or otherwise identify a plurality of interrelated keys. In embodiments, any type of encryption key or keys, e.g., fixed encryption keys, dynamic encryption keys, randomly generated encryption keys, etc. may be employed with the embodiments disclosed herein.

After obtaining the local control word, flow continues to operation **1510** where the network decrypted content is re-encrypted using the local control word to generate locally encrypted content. As was previously discussed, different types of encryption modes and encryption algorithms may be used to encrypt the content at operation **1510**. In an embodiment, the encryption may be based upon the key obtained at operation **1508**. In embodiments where multiple keys are obtained, one of the keys may be selected and used during encryption at operation **1510**. For example, an appropriate key may be selected based upon an identifier in the content. The identifier may be part of the content or may be added to the content or a header associated with the content as it is processed during the method **1500**. The identifier may be a single bit that identifies an even or an odd key (in embodiments where two keys are obtained). This identifier provides for the automatic selection of a key for use during the encryption process at operation **1510**.

In further embodiments, in addition to encrypting the content, the size of the content may be increased. It may be beneficial to increase the size of the content in order to make it more difficult for the content to be shared over a network. For example, increasing the content size will require greater bandwidth to properly share the content with unauthorized users over a network. For example, data may be added to a broadcast stream to make it more difficult to process or share with unauthorized users. In embodiments where the content is streamed (e.g., audio and/or video content) non-content data packets may be added to the content stream and the bandwidth rates may be increased. The increase in bandwidth and the addition of non-content data provides additional security for the content when it leaves the secure device and/or secure processor that performs the method 1500 by making the content more difficult to share and process. Further details regarding stream expansion are provided in U.S. Patent No. 8,385,542 entitled, "Methods and Apparatus for Securing Communications Between a Decryption Device and a Television Receiver," filed on April 27, 2009, which is hereby incorporated by reference in its entirety.

In embodiments, flow continues to optional operation **1512** where clock recovery data is added to the locally encrypted content. In embodiments, the type of clock recovery data included with the network encrypted content may be based upon the type of clock recovery mechanism employed. For example, embodiments disclosed herein may be practiced with different clock recovery mechanisms including, but not limited to, phase-locked looping, 8B/10B encoding, eight-to-fourteen modulation, or any other type of clock recovery technique known to the art. Operation 1512 may be optional because some clock recovery mechanisms do not require the addition of clock recovery data (e.g., phase-locked looping). In such embodiments, the data may be provided in accordance with the selected clock recovery mechanism at operation **1514**.

While the embodiment of the method **1500** is illustrated as decrypting the network encrypted content, subsequently locally encrypting the decrypted network encrypted content, and then adding clock recovery data as three distinct operations, one of skill in the art will appreciate that, in embodiments, the decryption, encryption, and/or addition of clock recovery data may be performed sequentially, performed as a single operation, as two operations, or performed in parallel. In embodiments, a person of skill in the art will appreciate that stream expansion may also be performed in the single decryption/encryption operation. As such, one of skill in the art will appreciate that the method described with respect to **FIG. 15** may be performed using fewer or more operations than are illustrated herein.

In further embodiments, the method **1500** may operate on stream data. In such embodiments, a network encrypted stream may be received at operation **1502**, a clear content stream may be generated by decrypting the network encrypted stream at operation **1504**, and a locally encrypted stream may be generated at operation **1512**. One of skill in the art will appreciate that the embodiments disclosed herein with respect to **FIG. 15** may operate on stream data as well as data transmitted in any other form.

Further to the embodiment illustrated by **FIG. 15**, after performing the local encryption, flow continues to operation **1514** where the locally encrypted content, with the clock recovery data, is provided to another device. For example, a smartchip may provide the locally encrypted content with clock recovery data to a conditional access SoC, a smartphone, a laptop, a tablet, or any other device connected to otherwise in communication with a smartchip at operation **1514**. Furthermore, inclusion of the clock recovery data may allow for synchronization of communication between the secure processor performing the method **1500** and another device when the connector does not provide for transmitting clock signals. In a general computing device, the locally encrypted content may be provided from a secure processor (e.g., a smartchip) to a general processor and/or unprotected memory for storage and/or display at operation **1514**. One of skill in the art will appreciate that the method **1500** provides a solution to the problems described herein by providing locally encrypted content to unsecure components as opposed to providing a control word or encryption key as is generally performed by devices and systems that do not support embodiments of a Transport I/O system as described herein. Furthermore, one of skill in the art will appreciate that the weakest security leak in such content protection systems may occur when data is transmitted from a secure device and/or processor to a general device. However, embodiments disclosed herein address this weakness by providing locally encrypted content and, optionally, content that has its data and bandwidth expanded, thereby making it harder for an unauthorized user to process, share, and access the content even if it is intercepted as it is transmitted within the secure device and/or processor system/architecture.

In an example , the locally encrypted content may be provided as individual locally encrypted elementary streams. For example, in embodiment where multiple network encrypted elementary streams are received and decrypted, the multiple elementary streams may be individually encrypted and returned as individual locally encrypted elementary streams. In such examples , each stream may include clock recovery data. In an embodiment, the multiple network encrypted elementary streams may be multiplexed into a single output stream. In such embodiments, the single output stream may be locally encrypted and then provided at operation **1514**. The single output stream may include clock recovery data. In examples , multiple elementary streams may be multiplexed into a single output stream prior to the local encryption performed at operation **1510**. In embodiments, multiple elementary streams may be multiplexed into a single output stream after the local encryption operation **1510**.

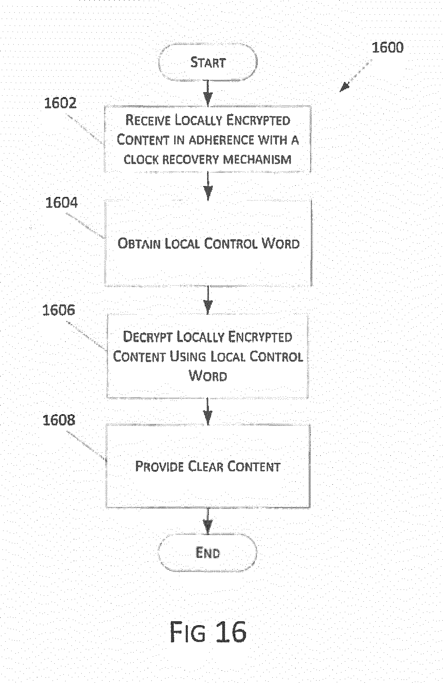

**FIG. 16** is an embodiment of a method 1600 for processing locally encrypted content received via a connector, such as, for example, a USB 3.0 connector. In embodiments, the method **1600** may be performed by a device such as a set-top-box, a laptop computer, a tablet computer, a smartphone, a television, or any other type of general computing device. In embodiments, the method **1600** may be performed during operation **1412** of **FIG. 14**. The method **1600** may be implemented using software, hardware, or a combination of software and hardware. Flow begins at operation 1602 where the locally encrypted content is received. In embodiments, the locally encrypted content may be received from a secure device such as a secure processor and/or smartchip that performed the method **1500** described with respect to **FIG. 15****.** For example, in a non-limiting embodiment, the locally encrypted content may be received from a smartchip that is in communication with a device via a connector, such as, for example, a USB 3.0 connector.

As previously discussed, in embodiments, the connector between a secure device, such as a smartchip, and the device performing the method **1600** may not have enough connection points (e.g., pins) to map to all of the pads of a Transport I/O smart card (e.g., smartcard **704** of **FIG. 7**). As such, the locally encrypted content received at operation **1602** may be received in a format in accordance with a clock recovery mechanism. Different clock recovery mechanisms may be employed with the systems and methods disclosed herein. For example, embodiments disclosed herein may be practiced with different clock recovery mechanisms including, but not limited to, phase-locked looping, 8B/10B encoding, eight-to-fourteen modulation, or any other type of clock recovery technique known to the art. In some embodiments, clock recovery data may be included with the network encrypted content received at operation 1602. In embodiments, the type of clock recovery data included with the network encrypted content may be based upon the type of clock recovery mechanism employed. In embodiments, the clock recovery data received as part of the network encrypted content may be used by the device performing the method **1600**, e.g., a conditional access SoC, smartphone, laptop, etc., to synchronize communications.

Upon receiving the locally encrypted content with the clock recovery data, flow continues to operation **1604** where a local control word is obtained. A local control word may be any type of encryption key. In embodiments, the local control word may be an encryption key that is specific to the device performing the method **1600**. In embodiments, the local control word may be obtained from the smartchip using ordinary software registers, a hardware key ladder, a random key generator, or from any other source unique to the device. In one embodiment, the local control word may be received from the secure device (such as a smartchip and/or processor performing the method **1500**). In such embodiments, the local control word may be received via another connection. For example, the local control word may be received via different connections (e.g., different pins) from the connections used to receive the locally encrypted content. For example, if a USB 3.0 connector is used, then the USB 2.0 pins may be utilized for local control word exchange while network encrypted and locally encrypted content are streamed using the USB 3.0 pins.

In another embodiment, the local control word may be generated by the device performing the method **1600**. In such embodiments, the local control word may have been previously shared with a secure processing device, smartchip, and/or secure processor that created the locally encrypted content received at operation **1602**. The local control word may be randomly generated. In embodiments, a single local control word may be used. In other embodiments, multiple local control words may be used. In such embodiments, the local control word may change periodically such that a local control word is discarded for a new local control word after a set period of time.

Flow continues to operation **1606** where the locally encrypted content is decrypted using the local control word. Decryption of the locally encrypted content may produce content in the clear that is accessible by an application. One of skill in the art will appreciate that many type(s) of encryption mode(s) and/or algorithm(s) may be employed to decrypt the locally encrypted content. As such, a type of decryption algorithm may be employed at operation **1606** to decrypt the content using the local control word. Furthermore, the device performing the decryption may be capable of handling and processing the locally encrypted content despite the increased bandwidth of the locally encrypted content due to non-content data. In such embodiments, decryption of the locally encrypted content at operation 1606 may include identifying and removing non-content data from the content. In another embodiment, removal of the non-content data may not take place until the clear content is processed for display or storage. The device performing the method **1600** may also utilize the clock recovery data when decrypting the locally encrypted content at operation **1606**.

Flow continues to operation **1608** where the clear content is provided. In one embodiment, providing the clear content may include decoding, displaying and or otherwise playing the clear content. For example, the clear content may be displayed on a television, monitor, and or display that may be part of the device or in communication with the device performing the method **1600**. In another embodiment, providing the clear content may include storing the clear content in data storage that may be part of the device or connected to the device performing the method **1600**.

In an alternate embodiment, persistent encryption may be performed by not immediately decrypting the locally encrypted content as described in FIG. 16. In such embodiments, persistent encryption may be utilized on content, such as MPEG Transport Packets received from a broadcasted network transmission. In such embodiments, a secure device may still perform network decryption and local link encryption as described in **FIG. 1500**; however, the device that receives the locally encrypted content may not immediately perform local link decryption. Instead, the device receiving the locally encrypted content may store the locally encrypted content, as it is encrypted, for later use. This allows the content to be encrypted for secure local storage, but the secure device can still control when the content is decrypted by, for example, providing a decryption key at a later time.

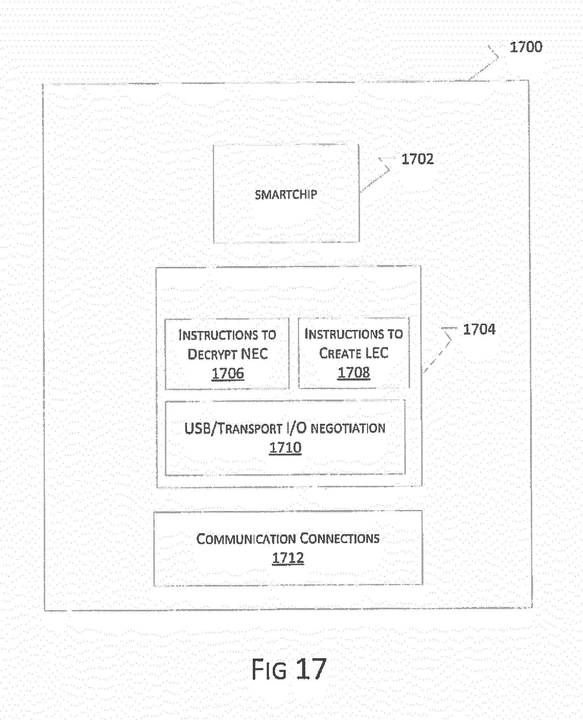

**FIG. 17** is an embodiment of a secure processing device **1700** that may be employed with the systems or to perform the methods disclosed herein. In embodiments, the secure processing device may be a smartchip. However, one of skill in the art will appreciate that any other type of secure device may be employed with the systems and methods disclosed herein. In embodiments, the secure processing device **1700** may be connected to a device performing the method **400** described with respect to **FIG. 4**. In another embodiment, the secure processing device **1700** may be a removable component of a device performing the method **400**. In embodiments, the secure processing device **1700** may perform the method **1300** described with respect to **FIG. 13**. In further embodiments, the secure processing device **1700** may perform the method **1500** described with respect to **FIG. 15**.

In embodiments, secure processing device **1700** includes one or more smartchips **1702**. The one or more smartchips may include one or more processing units. In some embodiments, one or more components of the methods described herein are performed by the one or more smartchips **1702**. For example, the one or more smartchips **1702** may be used to decrypt network encrypted content, create locally encrypted content, and create non-content data as described in the method **1500** of **FIG. 15**.

Secure processing device **1700** may also include memory **1704**. Memory **1704** includes, computer storage media such as, but not limited to, RAM, ROM, EEPROM, flash memory or other memory technology, or any other non-transitory medium which is used to store information and which is accessed by secure processing device **1700** and one or more processing units **1702**. Memory **1704** may store executable instructions to perform the methods disclosed herein. For example, memory **1704** may include instructions to decrypt network encrypted content (NEC) **1706**. Memory may also store the instructions to encrypt clear content to create locally encrypted content (LEC) **1708**. Furthermore, the memory **1704** may include instructions to perform a USB/Transport I/O negotiation **1710** as described herein. Furthermore, the USB/Transport I/O negotiation instructions **1710** may include instructions to configure a connection (e.g., reconfigure pins in a USB 3.0 connector) based upon the negotiation.

Secure processing device **1700** may also contain communications connection(s) **1712** that allow the device to communicate with other devices. Communications connection(s) **1712** may include standard connectors, such as a USB 2.0 connector, a USB 3.0 connector, a SCSI connector, an IEEE 1394 connector, etc. Communication connection(s) **1710** may be used to transmit communication media. Communication media may embody a modulated data signal, such as a carrier wave or other transport mechanism and includes any information delivery media, which may embody computer readable instructions, data structures, program modules, or other data in a modulated data signal. The term "modulated data signal" means a signal that has one or more of its characteristics set or changed in such a manner as to encode information or a message in the data signal. By way of example, and not limitation, communication media includes wired media such as a wired network or direct-wired connection, and wireless media such as an acoustic, RF, infrared, and other wireless media. In embodiments, network encrypted content such may be received over communications connection(s) **1712b.** Locally encrypted content may be transmitted over communications connection(s) **1712**. In still further embodiments, the instructions to perform the Transport I/O methods described herein may be received via communications connection(s) **1712**. For example, a head-end may update secure processing device **1700** with instructions to perform the methods disclosed herein. The instructions may be stored in memory **1704**. Communications connection(s) **1710** thereby allows a head-end to update secure devices deployed in the field with instructions to perform the methods disclosed herein. Communications connections also provide the secure processing device **1700** with the ability to receive network encrypted content from a device and return locally encrypted content to the device.

Although the embodiment of the secure processing device **1700** is illustrated as having memory **1704** that includes instructions to perform the methods disclosed herein, in alternate embodiments, the instructions to perform the methods disclosed herein may be performed by an application specific integrated circuit (ASIC) that is part of the secure processing device **1700**.

The embodiments disclosed herein provide systems, methods, and devices for performing conditional access, such as the Transport I/O embodiments disclosed herein, using common connectors found on many different devices, such as a USB 3.0 connector. While specific embodiments have been disclosed herein, one of skill in the art will appreciate that other methods may be employed to perform conditional access using a common connector without departing from the spirit of this disclosure. For example, the USB 3.0 protocol stack may be used as-is to encapsulate data packets that include command and control data, reset data, network encrypted content, and/or locally encrypted content.

The embodiments described herein may be employed using software, hardware, or a combination of software and hardware to implement and perform the systems and methods disclosed herein. Although specific devices have been recited throughout the disclosure as performing specific functions, one of skill in the art will appreciate that these devices are provided for illustrative purposes, and other devices may be employed to perform the functionality disclosed herein without departing from the scope of the disclosure.

This disclosure described some embodiments of the present invention with reference to the accompanying drawings, in which only some of the possible embodiments were shown. Other aspects may, however, be embodied in many different forms and should not be construed as limited to the embodiments set forth herein. Rather, these embodiments were provided so that this disclosure was thorough and complete and fully conveyed the scope of the possible embodiments to those skilled in the art.

Although specific embodiments were described herein, the scope of the invention is not limited to those specific embodiments. One skilled in the art will recognize other embodiments or improvements that are within the scope of the present invention. Therefore, the specific structure, acts, or media are disclosed only as illustrative embodiments. The scope of the invention is defined by the following claims.

## Claims

1. A secure processor for performing a method comprising means configured to :
receive (1502), via a USB connector, a first network encrypted elementary stream, wherein the first network encrypted elementary stream is received in accordance with a first clock recovery mechanism;
receive (1502), via the USB connector, a second network encrypted elementary stream, wherein the second network encrypted elementary stream is received in accordance with the first clock recovery mechanism;
decrypt (1506) the first and second network encrypted elementary streams using at least one network control word to generate first and second clear content streams, wherein decrypting the first and second network encrypted elementary streams is based at least in part on the first clock recovery mechanism;
obtain (1508) at least one local control word;
encrypt (1510) the first and second clear content streams to produce first and second locally encrypted content streams, wherein the first and second locally encrypted content streams are generated using the at least one local control word;
multiplex the first and second locally encrypted content streams into an output stream;
provide (1514), to a video processing device via the USB connector, the output stream,
wherein the output stream is provided in accordance with the first clock recovery mechanism,
wherein the first clock recovery mechanism is employed in order to synchronize communications between the secure processor and other devices.

2. The secure processor of claim 1, wherein the USB connector is a USB 3.0 connector.

3. The secure processor of claim 2, wherein the secure processor further comprises means configured to configure a Receive- pin as an SC_out- interface; configure a Receive+ pin as an SC_out+ interface; configure a Transmit- pin as an SC_IN- interface; and configure a Transmit+ pin as an SC_IN+ interface.

4. The secure processor of claim 1, wherein the means configured to encrypt the first and second clear content streams are further configured to utilize a transport mode encryption.

5. The secure processor of claim 1, further comprising means configured to
obtain a first local control word, wherein the first clear content stream is encrypted using the first local control word; and
obtain optional additional local control word(s), wherein optional additional network content stream(s) are encrypted using the optional additional local control word(s), and wherein some or all of the local control words are different.

6. A computer storage medium encoding computer executable instructions that, when executed by a secure processor, perform a method comprising:
receiving (1502), via a USB connector, a first network encrypted elementary stream, wherein the first network encrypted elementary stream comprises first clock recovery data; receiving (1502), via the USB connector, a second network encrypted elementary stream,
wherein the first network encrypted elementary stream comprises second clock recovery data, wherein the first and second clock recovery data is used by the secure processor to synchronize communications;
decrypting (1506) the first and second network encrypted elementary streams using at least one network control word to generate first and second clear content streams, wherein decrypting the first and second network encrypted elementary streams is based at least in part on the first and second clock recovery data;
obtaining (1508) at least one local control word;
encrypting (1510) the first and second clear content streams to produce first and second locally encrypted content streams, wherein the first and second locally encrypted content streams are generated using the at least one local control word;
multiplexing the first and second locally encrypted content streams into an output stream;
adding (1512) third clock recovery data to the output stream; and
providing (1514), to a video processing device via the USB connector, the output stream, wherein the output stream comprises third clock recovery data to allow synchronization of communication between the secure processor and the video processing device.

7. The computer storage medium of claim 6, wherein a first network control word is used to decrypt the first network encrypted elementary stream using the first clock recovery data and second network control word is used to decrypt the second network encrypted elementary stream using the second clock recovery data, and wherein the first and second network control words are different.

8. The computer storage medium of claim 6, wherein the at least one local control word is generated by the secure processor.

9. The computer storage medium of claim 6, wherein the method further comprises:
obtaining a first local control word, wherein the first clear content stream is encrypted using the first local control word; and
obtaining optional additional local control word(s), wherein optional additional network content stream(s) are encrypted using the optional additional local control word(s), and wherein some or all of the local control words are different.

10. The computer storage medium of claim 6, wherein the USB connector is a USB 3.0 connector.

11. A method performed by a secure processor, comprising:
receiving (1502), via a USB connector, a first network encrypted elementary stream, wherein the first network encrypted elementary stream is received in accordance with a first clock recovery mechanism;
receiving (1502), via the USB connector, a second network encrypted elementary stream, wherein the second network encrypted elementary stream is received in accordance with the first clock recovery mechanism;
decrypting (1506) the first and second network encrypted elementary streams using at least one network control word to generate first and second clear content streams, wherein decrypting the first and second network encrypted elementary streams is based at least in part on the first clock recovery mechanism;
obtaining (1508) at least one local control word;
encrypting (1510) the first and second clear content streams to produce first and second locally encrypted content streams, wherein the first and second locally encrypted content streams are generated using the at least one local control word;
multiplexing the first and second locally encrypted content streams into an output stream;
providing (1514), to a video processing device via the USB connector, the output stream, wherein the output stream is provided in accordance with the first clock recovery mechanism,
wherein the first clock recovery mechanism is employed in order to synchronize communications between the secure processor and other devices.

12. The method of claim 11, further comprising:
detecting (1302) a connection to a device, wherein the connection is via the USB connector;
determining (1306) if the device supports a conditional access mode; and
when the device supports the conditional access mode, configuring (1310) the USB connector in accordance with the conditional access mode.

13. The method of claim 12, wherein the USB connector is a USB 3.0 connector.

14. The method of claim 13, wherein configuring the USB connector further comprises:
configuring a Receive- pin as an SC_IN- interface;
configuring a Receive+ pin as an SC_IN+ interface;
configuring a Transmit- pin as an SC_out- interface; and
configuring a Transmit+ pin as an SC_out+ interface.

15. The method of claim 14, further comprising:
receiving network encrypted content via the Receive- and Receive+ pins; and
sending locally encrypted content via the Transmit- and Transmit+ pins.

## Patentansprüche

1. Sicherer Prozessor zum Ausführen eines Verfahrens, umfassend Mittel ausgebildet zum:
Empfangen (1502) eines ersten netzwerkverschlüsselten Elementarstroms über einen USB-Anschluss,
wobei der erste netzwerkverschlüsselte Elementarstrom entsprechend einem ersten Taktrückgewinnungsmechanismus empfangen wird;
Empfangen (1502) eines zweiten netzwerkverschlüsselten Elementarstroms über den USB-Anschluss,
wobei der zweite netzwerkverschlüsselte Elementarstrom entsprechend dem ersten Taktrückgewinnungsmechanismus empfangen wird;
Entschlüsseln (1506) von erstem und zweitem verschlüsselten Elementarstrom unter Verwendung von wenigstens einem Netzwerksteuerungswort zum Erzeugen eines ersten und zweiten klaren Inhaltsstroms, wobei das Entschlüsseln von erstem und zweitem netzwerkverschlüsselten Elementarstrom wenigstens teilweise auf dem ersten Taktrückgewinnungsmechanismus basiert;
Ermitteln (1508) von wenigstens einem lokalen Steuerwort;
Verschlüsseln (1510) von erstem und zweitem klaren Inhaltsstrom zum Erzeugen eines ersten und zweiten lokal verschlüsselten Inhaltsstroms, wobei erster und zweiter lokal verschlüsselter Inhaltsstrom unter Verwendung des wenigstens einen lokalen Steuerworts erzeugt werden;
Multiplexen von erstem und zweitem lokal verschlüsselten Inhaltsstrom zu einem Ausgabestrom;
Bereitstellen (1514) des Ausgabestroms für eine Videoverarbeitungsvorrichtung über den USB-Anschluss,
wobei der Ausgabestrom entsprechend dem ersten Taktrückgewinnungsmechanismus bereitgestellt wird,
wobei der erste Taktrückgewinnungsmechanismus zum Synchronisieren von Kommunikationen zwischen dem sicheren Prozessor und anderen Vorrichtungen genutzt wird.

2. Sicherer Prozessor nach Anspruch 1, wobei der USB-Anschluss ein USB-3.0-Anschluss ist.

3. Sicherer Prozessor nach Anspruch 2, wobei der sichere Prozessor ferner Mittel umfasst ausgebildet zum
Konfigurieren eines "Receive-"-Pins als eine "SC_out-"-Schnittstelle;
Konfigurieren eines "Receive+"-Pins als eine "SC_out+"-Schnittstelle;
Konfigurieren eines "Transmit-"-Pins als eine "SC_IN-"-Schnittstelle; und
Konfigurieren eines "Transmit+"-Pins als eine "SC_IN+"-Schnittstelle.

4. Sicherer Prozessor nach Anspruch 1, wobei die zum Verschlüsseln von erstem und zweitem klaren Inhaltsstrom ausgebildeten Mittel ferner zum Nutzen einer Transportmodusverschlüsselung ausgebildet sind.

5. Sicherer Prozessor nach Anspruch 1, ferner umfassend Mittel ausgebildet zum
Ermitteln eines ersten lokalen Steuerworts, wobei der erste klare Inhaltsstrom unter Verwendung des ersten lokalen Steuerworts verschlüsselt wird; und
Ermitteln von optionalen zusätzlichen lokalen Steuerwörtern, wobei optionale zusätzliche Netzwerkinhaltsströme unter Verwendung der optionalen zusätzlichen lokalen Steuerwörter verschlüsselt werden und wobei einige oder alle der lokalen Steuerwörter verschieden sind.

6. Computerspeichermedium zum Codieren von computerausführbaren Anweisungen, die, wenn von einem sicheren Prozessor ausgeführt, ein Verfahren ausführen umfassend:
Empfangen (1502) eines ersten netzwerkverschlüsselten Elementarstroms über einen USB-Anschluss, wobei der erste netzwerkverschlüsselte Elementarstrom erste Taktrückgewinnungsdaten umfasst;
Empfangen (1502) eines zweiten netzwerkverschlüsselten Elementarstroms über den USB-Anschluss, wobei der erste netzwerkverschlüsselte Elementarstrom zweite Taktrückgewinnungsdaten umfasst, wobei erste und zweite Taktrückgewinnungsdaten vom sicheren Prozessor zum Synchronisieren von Kommunikationen verwendet werden;
Entschlüsseln (1506) von erstem und zweitem verschlüsselten Elementarstrom unter Verwendung von wenigstens einem Netzwerksteuerungswort zum Erzeugen eines ersten und zweiten klaren Inhaltsstroms, wobei das Entschlüsseln von erstem und zweitem netzwerkverschlüsselten Elementarstrom wenigstens teilweise auf den ersten und zweiten Taktrückgewinnungsdaten basiert;
Ermitteln (1508) von wenigstens einem lokalen Steuerwort;
Verschlüsseln (1510) von erstem und zweitem klaren Inhaltsstrom zum Erzeugen eines ersten und zweiten lokal verschlüsselten Inhaltsstroms, wobei erster und zweiter lokal verschlüsselter Inhaltsstrom unter Verwendung des wenigstens einen lokalen Steuerworts erzeugt werden;
Multiplexen von erstem und zweitem lokal verschlüsselten Inhaltsstrom zu einem Ausgabestrom;
Hinzufügen (1512) von dritten Taktrückgewinnungsdaten zum Ausgabestrom; und
Bereitstellen (1514) des Ausgabestroms für eine Videoverarbeitungsvorrichtung über den USB-Anschluss, wobei der Ausgabestrom dritte Taktrückgewinnungsdaten umfasst, um die Synchronisierung der Kommunikation zwischen dem sicheren Prozessor und der Videoverarbeitungsvorrichtung zu ermöglichen.

7. Computerspeichermedium nach Anspruch 6, wobei ein erstes Netzwerksteuerungswort zum Entschlüsseln des ersten netzwerkverschlüsselten Elementarstroms unter Verwendung der ersten Taktrückgewinnungsdaten verwendet wird und ein zweites Netzwerksteuerungswort zum Entschlüsseln des zweiten netzwerkverschlüsselten Elementarstroms unter Verwendung der zweiten Taktrückgewinnungsdaten verwendet wird, und wobei erstes und zweites Netzwerksteuerungswort verschieden sind.

8. Computerspeichermedium nach Anspruch 6, wobei das wenigstens eine lokale Steuerwort vom sicheren Prozessor erzeugt wird.

9. Computerspeichermedium nach Anspruch 6, wobei das Verfahren ferner umfasst:
Ermitteln eines ersten lokalen Steuerworts, wobei der erste klare Inhaltsstrom unter Verwendung des ersten lokalen Steuerworts verschlüsselt wird; und
Ermitteln von optionalen zusätzlichen lokalen Steuerwörtern, wobei optionale zusätzliche Netzwerkinhaltsströme unter Verwendung der optionalen zusätzlichen lokalen Steuerwörter verschlüsselt werden und wobei einige oder alle der lokalen Steuerwörter verschieden sind.

10. Computerspeichermedium nach Anspruch 6, wobei der USB-Anschluss ein USB-3.0-Anschluss ist.

11. Von einem sicheren Prozessor ausgeführtes Verfahren, umfassend:
Empfangen (1502) eines ersten netzwerkverschlüsselten Elementarstroms über einen USB-Anschluss, wobei der erste netzwerkverschlüsselte Elementarstrom entsprechend einem ersten Taktrückgewinnungsmechanismus empfangen wird;
Empfangen (1502) eines zweiten netzwerkverschlüsselten Elementarstroms über den USB-Anschluss, wobei der zweite netzwerkverschlüsselte Elementarstrom entsprechend dem ersten Taktrückgewinnungsmechanismus empfangen wird;
Entschlüsseln (1506) von erstem und zweitem verschlüsselten Elementarstrom unter Verwendung von wenigstens einem Netzwerksteuerungswort zum Erzeugen eines ersten und zweiten klaren Inhaltsstroms, wobei das Entschlüsseln von erstem und zweitem netzwerkverschlüsselten Elementarstrom wenigstens teilweise auf dem ersten Taktrückgewinnungsmechanismus basiert;
Ermitteln (1508) von wenigstens einem lokalen Steuerwort;
Verschlüsseln (1510) von erstem und zweitem klaren Inhaltsstrom zum Erzeugen eines ersten und zweiten lokal verschlüsselten Inhaltsstroms, wobei erster und zweiter lokal verschlüsselter Inhaltsstrom unter Verwendung des wenigstens einen lokalen Steuerworts erzeugt werden;
Multiplexen von erstem und zweitem lokal verschlüsselten Inhaltsstrom zu einem Ausgabestrom;
Bereitstellen (1514) des Ausgabestroms für eine Videoverarbeitungsvorrichtung über den USB-Anschluss, wobei der Ausgabestrom entsprechend dem ersten Taktrückgewinnungsmechanismus bereitgestellt wird,
wobei der erste Taktrückgewinnungsmechanismus zum Synchronisieren von Kommunikationen zwischen dem sicheren Prozessor und anderen Vorrichtungen genutzt wird.

12. Verfahren nach Anspruch 11, ferner umfassend:
Erfassen (1302) einer Verbindung mit einer Vorrichtung, wobei die Verbindung über den USB-Anschluss erfolgt;
Bestimmen (1306), ob die Vorrichtung einen bedingten Zugriffsmodus unterstützt; und
wenn die Vorrichtung den bedingten Zugriffsmodus unterstützt, Konfigurieren (1310) des USB-Anschlusses gemäß dem bedingten Zugriffsmodus.

13. Verfahren nach Anspruch 12, wobei der USB-Anschluss ein USB-3.0-Anschluss ist.

14. Verfahren nach Anspruch 13, wobei das Konfigurieren des USB-Anschlusses ferner umfasst:
Konfigurieren eines "Empfangen-"-Pins als eine "SC_IN-"-Schnittstelle;
Konfigurieren eines "Empfangen+"-Pins als eine "SC_IN+"-Schnittstelle;
Konfigurieren eines "Transmit+"-Pins als eine "SC_out-"-Schnittstelle; und Konfigurieren eines "Transmit+"-Pins als eine "SC_out+"-Schnittstelle.

15. Verfahren nach Anspruch 14, ferner umfassend:
Empfangen von netzwerkverschlüsseltem Inhalt über "Receive-" und "Receive+"-Pin; und
Senden von lokal verschlüsseltem Inhalt über "Transmit-" und "Transmit+"-Pin.

## Revendications

1. Processeur sécurisé destiné à réaliser un procédé comprenant un moyen configuré pour :
recevoir (502), par l'intermédiaire d'un connecteur USB, un premier flux élémentaire crypté de réseau, le premier flux élémentaire crypté de réseau étant reçu en fonction d'un premier mécanisme de récupération d'horloge,
recevoir (1502), par l'intermédiaire du connecteur USB, un second flux élémentaire crypté de réseau, le second flux élémentaire crypté de réseau étant reçu en fonction du premier mécanisme de récupération d'horloge,
décrypter (1506) les premier et second flux élémentaires cryptés de réseau en utilisant au moins un mot de commande de réseau pour générer des premier et second flux de contenu en clair, le décryptage des premier et second flux élémentaires cryptés de réseau étant fondé au moins en partie sur le premier mécanisme de récupération d'horloge,
acquérir (1508) au moins un mot de commande local,
crypter (1510) les premier et second flux de contenu en clair pour générer des premier et second flux de contenu cryptés localement, les premier et second flux de contenu cryptés localement étant générés en utilisant le ou les mots de commande locaux,
multiplexer les premier et second flux de contenu cryptés localement en un flux de sortie,
délivrer (1514) le flux de sortie à un dispositif de traitement vidéo par l'intermédiaire du connecteur USB, le flux de sortie étant délivré en fonction du premier mécanisme de récupération horloge,
dans lequel le premier mécanisme de récupération d'horloge est utilisé afin de synchroniser les communications entre le processeur sécurisé et d'autres dispositifs.

2. Processeur sécurisé selon la revendication 1, dans lequel le connecteur USB est un connecteur USB 3.0.

3. Processeur sécurisé selon la revendication 2, dans lequel le processeur sécurisé comprend en outre un moyen configuré pour :
configurer une broche Receive- en tant qu'interface SC_out-,
configurer une broche Receive+ en tant qu'interface SC_out+,
configurer une broche Transmit- en tant qu'interface SC_IN-, et
configurer une broche Transmit+ en tant qu'interface SC_IN+.

4. Processeur sécurisé selon la revendication 1, dans lequel le moyen configuré pour crypter les premier et second flux de contenu en clair est en outre configuré pour utiliser un cryptage de mode de transport.

5. Processeur sécurisé selon la revendication 1, comprenant en outre un moyen configuré pour :
acquérir un premier mot de commande local, le premier flux de contenu en clair étant crypté en utilisant le premier mot de commande local, et
acquérir un ou des mots de commande locaux supplémentaires, le ou les flux de contenu de réseau supplémentaires en option étant cryptés en utilisant le ou les mots de commande locaux supplémentaires en option, et
dans lequel certains mots de commandes locaux ou la totalité sont différents.

6. Support de stockage sur ordinateur codant des instructions exécutables par ordinateur qui, lorsqu'elles sont exécutées par un processeur sécurisé, réalisent un procédé comprenant :
la réception (502), par l'intermédiaire d'un connecteur USB, d'un premier flux élémentaire crypté de réseau, le premier flux élémentaire crypté de réseau comprenant des premières données de récupération d'horloge,
la réception (1502), par l'intermédiaire du connecteur USB, d'un second flux élémentaire crypté de réseau, le second flux élémentaire crypté de réseau comprenant des deuxièmes données de récupération d'horloge, les premières et deuxièmes données de récupération horloge étant utilisées par le processeur sécurisé pour synchroniser les communications,
le décryptage (1506) des premier et second flux élémentaires cryptés de réseau en utilisant au moins un mot de commande de réseau pour générer des premier et second flux de contenu en clair, le décryptage des premier et second flux élémentaires cryptés de réseau étant fondé au moins en partie sur le premier mécanisme de récupération d'horloge,
l'acquisition (1508) d'au moins un mot de commande local,
le cryptage (1510) des premier et second flux de contenu en clair pour générer des premier et second flux de contenu cryptés localement, les premier et second flux de contenu cryptés localement étant générés en utilisant le ou les mots de commande locaux,
le multiplexage des premier et second flux de contenu cryptés localement en un flux de sortie,
l'ajout (1512) de troisièmes données de récupération d'horloge au flux de sortie, et
la délivrance (1514) du flux de sortie à un dispositif de traitement vidéo par l'intermédiaire du connecteur USB, le flux de sortie comprenant les troisièmes données de récupération d'horloge afin d'autoriser la synchronisation des communications entre le processeur sécurisé et le dispositif de traitement vidéo.

7. Support de stockage sur ordinateur selon la revendication 6, dans lequel un premier mot de commande de réseau est utilisé pour décrypter le premier flux élémentaire crypté de réseau en utilisant les premières données de récupération d'horloge, et un second mot de commande de réseau est utilisé pour décrypter le second flux élémentaire crypté de réseau en utilisant les deuxièmes données de récupération d'horloge, et où les premier et second mots de commande de réseau sont différents.

8. Support de stockage sur ordinateur selon la revendication 6, dans lequel le ou les mots de commande locaux sont générés par le processeur sécurisé.

9. Support de stockage sur ordinateur selon la revendication 6, dans lequel le procédé comprend en outre :
l'acquisition d'un premier mot de commande local, le premier flux de contenu en clair étant crypté en utilisant le premier mot de commande local, et
acquérir un ou des mots de commande locaux supplémentaires en option, où le ou les flux de contenu de réseau supplémentaires en option sont cryptés en utilisant le ou les mots de commandes locaux supplémentaires en option, et où certains des mots de commande locaux ou la totalité sont différents.

10. Support de stockage sur ordinateur selon la revendication 6, dans lequel le connecteur USB est un connecteur USB 3.0.

11. Procédé réalisé par un processeur sécurisé, comprenant :
la réception (502), par l'intermédiaire d'un connecteur USB, d'un premier flux élémentaire crypté de réseau, le premier flux élémentaire crypté de réseau étant reçu en fonction d'un premier mécanisme de récupération d'horloge,
la réception (1502), par l'intermédiaire du connecteur USB, dans second flux élémentaire crypté de réseau, le second flux élémentaire crypté de réseau étant reçu en fonction du premier mécanisme de récupération d'horloge,
le décryptage (1506) des premier et second flux élémentaires cryptés de réseau en utilisant au moins un mot de commande de réseau pour générer des premier et second flux de contenu en clair, le décryptage des premier et second flux élémentaires cryptés de réseau étant fondé au moins en partie sur le premier mécanisme de récupération d'horloge,
l'acquisition (1508) d'au moins un mot de commande local,
le cryptage (1510) des premier et second flux de contenu en clair pour générer des premier et second flux de contenu cryptés localement, les premier et second flux de contenu cryptés localement étant générés en utilisant le ou les mots de commande locaux,
le multiplexage des premier et second flux de contenu cryptés localement en un flux de sortie,
la délivrance (1514) du flux de sortie à un dispositif de traitement vidéo par l'intermédiaire du connecteur USB, le flux de sortie étant délivré en fonction du premier mécanisme de récupération horloge,
dans lequel le premier mécanisme de récupération d'horloge est utilisé afin de synchroniser les communications entre le processeur sécurisé et d'autres dispositifs.

12. Procédé selon la revendication 11, comprenant en outre :
la détection (1302) d'une connexion à un dispositif, la connexion étant réalisée par l'intermédiaire du connecteur USB,
la détermination (1306) de ce que le dispositif prend en charge un mode d'accès conditionnel, et
lorsque le dispositif prend en charge le mode d'accès conditionnel, la configuration (1310) du connecteur USB en fonction du mode d'accès conditionnel.

13. Procédé selon la revendication 12, dans lequel le connecteur USB est un connecteur USB 3.0.

14. Procédé selon la revendication 13, dans lequel la configuration du connecteur USB comprend en outre :
la configuration d'une broche Receive- en tant qu'interface SC_out-,
la configuration d'une broche Receive+ en tant qu'interface SC_out+,
la configuration d'une broche Transmit- en tant qu'interface SC_IN-, et
la configuration d'une broche Transmit+ en tant qu'interface SC_IN+.

15. Procédé selon la revendication 14, comprenant en outre :
la réception d'un contenu crypté du réseau par l'intermédiaire des broches Receive- et Receive+, et
l'envoi du contenu crypté localement par l'intermédiaire des broches Transmit- et Transmit+.
